# EUROPEAN PATENT SPECIFICATION

(11) **EP 4 369 114 B1**
(45) Date of publication and mention of the grant of the patent: **23.09.2026**
(21) Application number: 23773159.1
(22) Date of filing: 27.09.2023
(51) Int. Cl.: G04G 17/04, G04G 21/00, H04R 9/06, G04G 99/00, H04R 1/02

(54) **WEARABLE ELECTRONIC DEVICE COMPRISING SPEAKER MODULE**
TRAGBARE ELEKTRONISCHE VORRICHTUNG MIT LAUTSPRECHERMODUL
DISPOSITIF ÉLECTRONIQUE À PORTER SUR SOI COMPRENANT UN MODULE DE HAUT-PARLEUR

(30) Priority: 30.09.2022 KR 20220125638; 24.10.2022 KR 20220137637; 29.08.2023 KR 20230113640
(43) Date of publication of application: 15.05.2024
(73) Proprietor: Samsung Electronics Co., Ltd., Suwon-Si, Gyeonggi-do 16677 (KR)
(72) Inventor: KANG, Junghyun, Suwon-si, Gyeonggi-do 16677 (KR); JANG, Dongheon, Suwon-si, Gyeonggi-do 16677 (KR)
(74) Representative: Gulde & Partner
(86) International application number: PCT/KR2023/015089
(87) International publication number: WO 2024/072132

(56) References cited:
- KR-A- 20090 013 908
- KR-A- 20180 024 632
- KR-A- 20210 014 030
- KR-A- 20220 117 067
- US-A1- 2009 220 113
- US-A1- 2020 169 816
- US-A1- 2021 088 979

## Description

### [Technical Field]

Various embodiments of the disclosure described herein relate to a wearable electronic device including a speaker module, and more particularly, relate to a structure in which a speaker module is coupled to a housing of an electronic device.

### [Background Art]

With the common use of portable devices such as smartphones, wearable electronic devices (e.g., smart watches) used in conjunction with the smartphones have been increasingly used. The wearable electronic devices may be connected with the smartphones through wired or wireless communication and may provide users with various functions or operations provided by the smartphones. Due to the convenience, the spread of wearable electronic devices such as smart watches has been on the rise.

A wearable electronic device may include a speaker module for outputting sound to the outside. The speaker module may be closely coupled to a structure in the housing of the wearable electronic device to secure waterproof performance of the wearable electronic device. US2020/169816 A1 and US2021/088979 A1 provide examples of such wearable elevtronic devices.

### [Disclosure]

### [Technical Solution]

A wearable electronic device according to an embodiment includes a housing including a front member that faces a first direction, a rear member that faces a second direction opposite to the first direction, and a side member that surrounds a space between the front member and the rear member, a display disposed inside the housing and viewable through the front member, and a speaker module accommodated in the housing and coupled to an inner surface of the rear member. The speaker module includes a speaker frame including first coupling parts coupled to the rear member, a speaker unit including a magnet, a voice coil, and a diaphragm, and a yoke that includes second coupling parts coupled to the rear member and that is coupled to one surface of the magnet to surround at least a portion of an outer surface of the speaker frame. The first coupling parts and the second coupling parts is coupled to the rear member through coupling members in a stacked manner.

### [Description of Drawings]

FIG. 1 is a front perspective view of an electronic device according to an embodiment.
FIG. 2 is a rear perspective view of the electronic device according to an embodiment.
FIG. 3 is an exploded perspective view of the electronic device, particularly of a housing thereof, according to an embodiment.
FIG. 4 is a sectional view of the electronic device, particularly of the housing thereof, according to an embodiment.
FIG. 5A is a view illustrating a rear case and a speaker module of the electronic device according to an embodiment.
FIG. 5B is a partially exploded perspective view illustrating the rear case and the speaker module of the electronic device according to an embodiment.
FIG. 6A is a view illustrating an internal configuration of the speaker module according to an embodiment.
FIG. 6B is a view illustrating the speaker module of the electronic device according to an embodiment.
FIG. 7 is an exploded perspective view illustrating the speaker module of the electronic device according to an embodiment.
FIG. 8 is a view illustrating a coupling structure of the rear case and the speaker module of the electronic device according to an embodiment.
FIG. 9A is a view illustrating the rear case and the speaker module of the electronic device according to an embodiment.
FIG. 9B is a view illustrating the rear case and the speaker module of the electronic device according to an embodiment.
FIG. 10 is a view illustrating an internal configuration of a speaker module according to an embodiment.
FIG. 11A is a view illustrating a rear case and a speaker module of an electronic device according to an embodiment.
FIG. 11B is a view illustrating the rear case and the speaker module of the electronic device according to an embodiment.
FIG. 11C is a view illustrating the rear case and the speaker module of the electronic device according to an embodiment.
FIG. 12 is a block diagram illustrating an electronic device in a network environment according to various embodiments.

With regard to description of the drawings, identical or similar reference numerals may be used to refer to identical or similar components.

### [Mode for Invention]

Hereinafter, various embodiments of the disclosure will be described with reference to accompanying drawings. Accordingly, those of ordinary skill in the art will recognize that modification, equivalent, and/or alternative on the various embodiments described herein can be variously made without departing from the scope as defined by the appended claims.

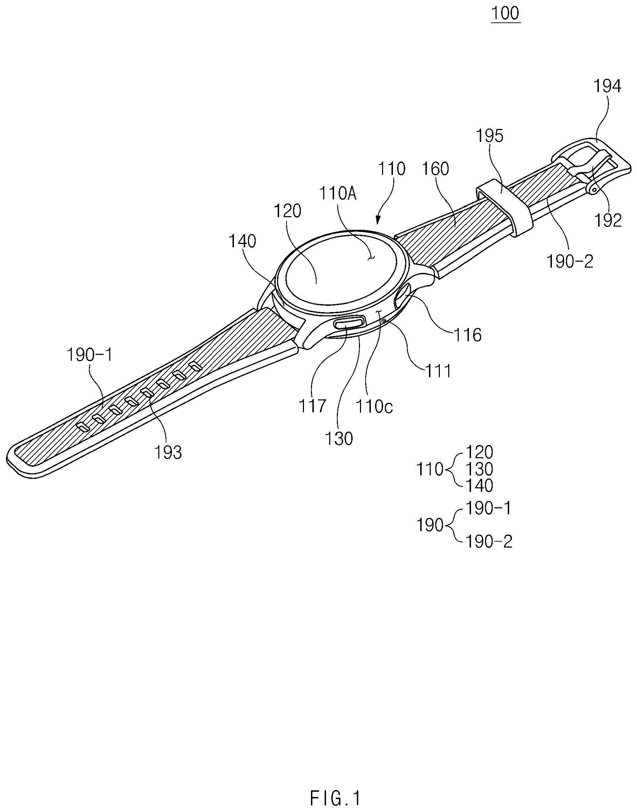

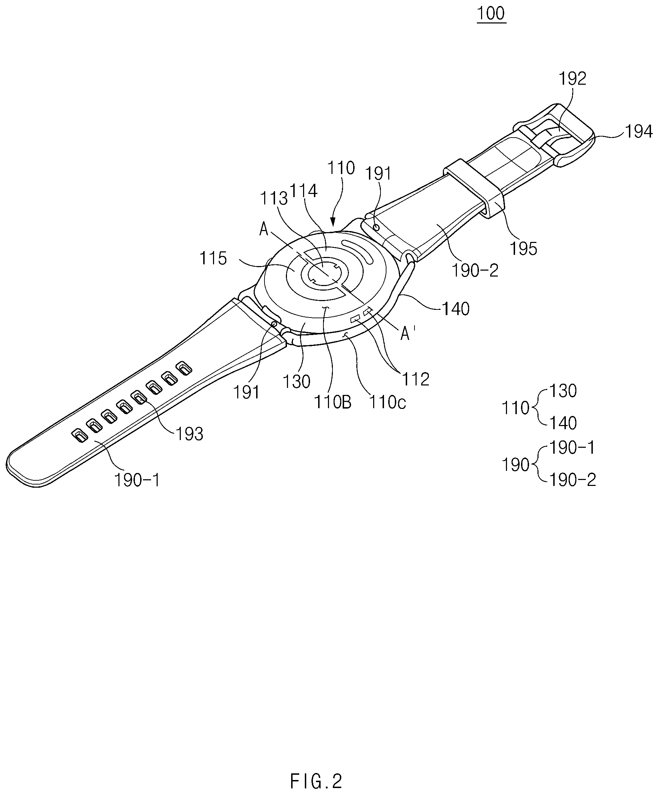

FIG. 1 is a front perspective view of an electronic device according to an embodiment. FIG. 2 is a rear perspective view of the electronic device according to an embodiment.

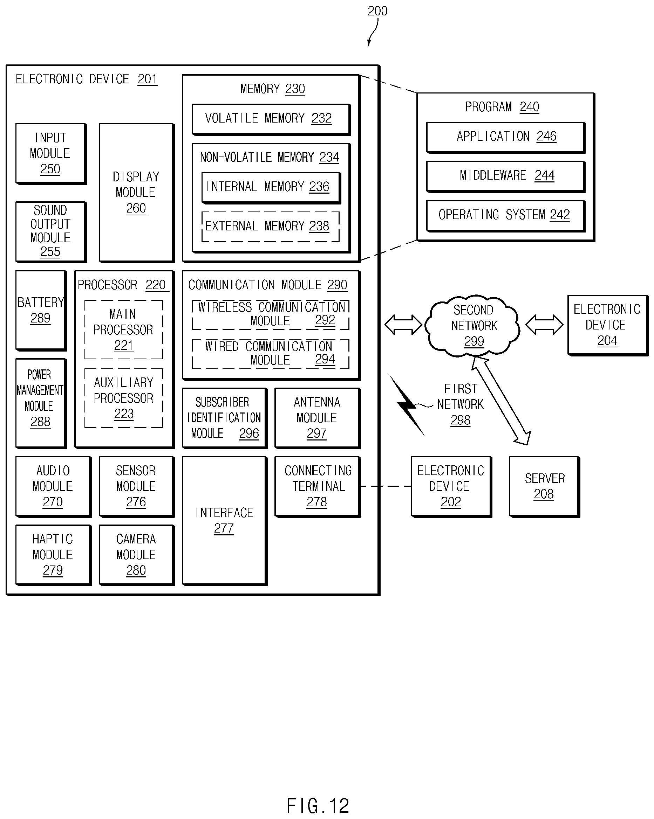

Referring to FIGS. 1 and 2, the electronic device 100 according to an embodiment may include a housing 110, an audio module (e.g., an audio module 270 of FIG. 12), biosensor modules 113, 114, and 115, key input devices 116 and 117, and/or a fastening member 190. In some embodiments, at least one of the components (e.g., biosensor module 113) may be omitted from the electronic device 100.

The electronic device 100 according to an embodiment may be a wearable electronic device. For example, the electronic device 100 may be a watch type electronic device (e.g., a smart watch) wearable on a part of a user's body (e.g., a wrist or an ankle). However, the electronic device is not limited to the illustrated embodiment.

The housing 110 may form at least a portion of the exterior of the electronic device 100. The housing 110 may include a front member 120, a side member 140 (e.g., a side frame), and/or a rear member 130. For example, the front member 120, the side member 140, and/or the rear member 130 may be coupled together.

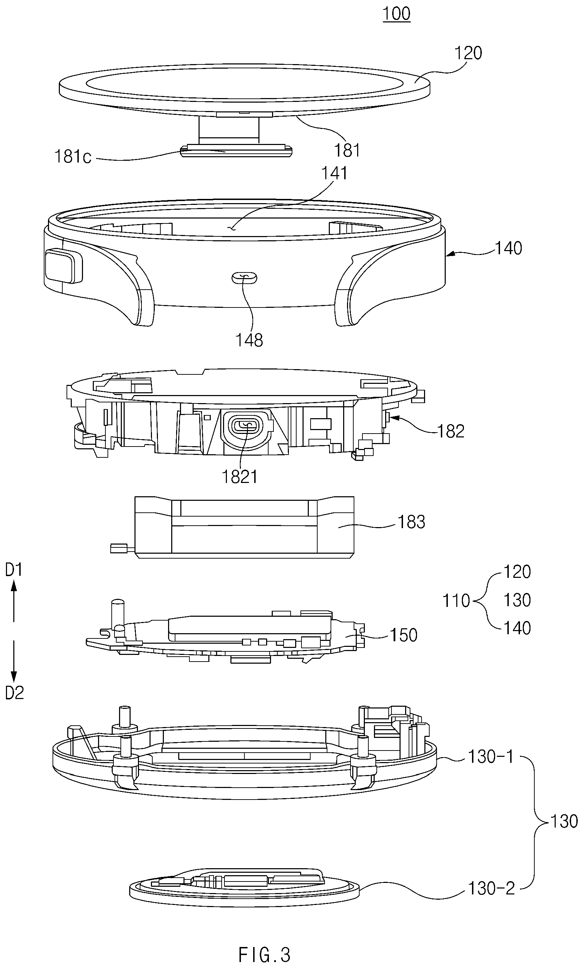

The housing 110 may be formed in a structure in which the side member 140 surrounds a space between the front member 120 and the rear member 130. For example, through a coupling structure of the front member 120, the side member 140, and/or the rear member 130, the housing 110 may provide an inner space in which other components (e.g., a display 181, a bracket 182, a circuit board 150, and/or a battery 183 of FIG. 3) of the electronic device 100 are accommodated.

The housing 110 may include a front surface 110A, a rear surface 110B facing away from the front surface 110A in a substantially opposite direction, and a side surface 110C surrounding a space between the front surface 110A and the rear surface 110B. For example, the front surface 110A may be formed or defined by a portion of the front member 120, the side surface 110C may be formed or defined by a portion of the side member 140, and the rear surface 110B may be formed or defined by a portion of the rear member 130. In various embodiments, the housing 110 may be understood to refer to a structure that forms some of the front surface 110A, the rear surface 110B, and the side surface 110C.

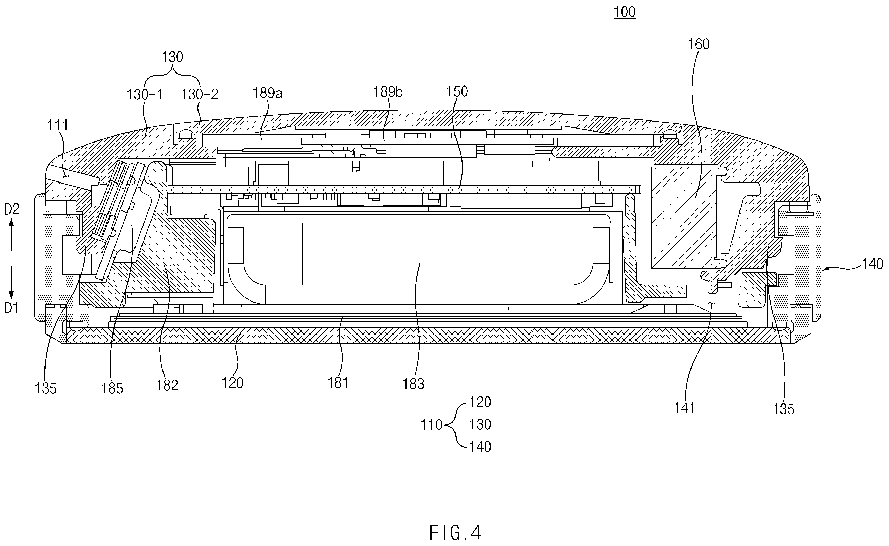

The audio module may be disposed in the housing 110 of the electronic device 100. For example, the audio module may include at least one microphone (e.g., a microphone module 185 of FIG. 4) and/or at least one speaker (e.g., a speaker module 160 of FIG. 4). The housing 110 (e.g., the rear member 130) may have sound holes 111 and 112 formed therein through which sound signals pass for operations or functions of the audio module 160 and 185. The sound holes 111 and 112 may include the microphone hole 111 and/or the speaker hole 112. The microphone hole 111 and the speaker hole 112 may be formed in at least portions of the rear member 130, respectively. However, the positions of the microphone hole 111 and the speaker hole 112 are not limited to the illustrated example, and the microphone hole 111 and the speaker hole 112 may be formed in another component (e.g., the side member 140).

For example, a microphone (e.g., the microphone module 185 of FIG. 4) for obtaining external sound may be disposed in the housing 110 so as to be adjacent to the microphone hole 111. The microphone may be configured to receive sound from outside the housing 110 through the microphone hole 111. According to various embodiments, the electronic device 100 may be configured such that a plurality of microphones are disposed in the housing 110 to sense sounds in various directions.

For example, a speaker (e.g., the speaker module 160 of FIG. 4) for outputting sound to the outside may be disposed in the housing 110 so as to be adjacent to the speaker hole 112. The speaker may be configured to output sound outside the housing 110 through the speaker hole 112. According to various embodiments, the speaker hole 112 and the microphone hole 111 may be implemented as a single hole. Alternatively, the electronic device 100 may be configured such that a speaker is included without the speaker hole 112 (e.g., a piezoelectric speaker).

The biosensor modules 113, 114, and 115 may include the first biosensor module 113 and/or the second biosensor module 114 and 115. The first biosensor module 113 and the second biosensor module 114 and 115 may be at least partially visually exposed through the rear surface 110B of the housing 110, or may be at least partially disposed on the rear surface 110B of the housing 110.

The first biosensor module 113 may be visually disposed on the rear surface 110B of the housing 110. The first biosensor module 113 may be, for example, a heart rate monitor (HRM) sensor. For example, a biometric signal sensed through the first biosensor module 113 may be a biometric signal related to a heart rate. In various embodiments, the first biosensor module 113 may include a light receiving part and a light emitting part. The first biosensor module 113 may be disposed in the housing 110, and at least a portion of the first biosensor module 113 may be visually exposed on the rear surface 110B of the housing 110 through a partial region (e.g., a transparent region) of the rear member 113. However, the electronic device 100 is not limited to the illustrated embodiment and the first biosensor module 113 may also be a pulse oximeter, for example.

The second biosensor module 114 and 115 may be at least partially disposed on the rear surface 110B of the housing 110. The second biosensor module 114 and 115 may be, for example, an electrocardiogram (ECG) sensor. For example, a biometric signal sensed through the second biosensor module 114 and 115 may be a biometric signal related to an electrocardiogram. For example, the second biosensor module 114 and 115 may include the first electrode region 114 and the second electrode region 115 that are formed of a conductive material, and the first electrode region 114 and the second electrode region 115 may make contact with the user's body. The second biosensor module 114 and 115 may be configured to obtain an electrical signal from a part of the user's body through the first electrode region 114 and the second electrode region 115 and detect a biometrical signal of the user based on the obtained electrical signal.

The electronic device 100 may further include a sensor module (e.g., a sensor module 276 of FIG. 12) that generates an electrical signal or a data value that corresponds to an operational state inside the electronic device 100 or an environmental state external to the electronic device 100, in addition to, i.e. different from, the biosensor modules 113, 114, and 115. According to various embodiments, the electronic device 100 may further include, for example, at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor.

The key input devices 116 and 117 may include button members (e.g., side keys) disposed on the side surface 110C of the housing 110. However, the electronic device 100 is not limited to the illustrated embodiment and the key input devices 116 and 117 may also be disposed at different positions.

The key input devices 116 and 117 may be rotated and/or pressed by a user operation and may receive user inputs for implementing various functions of the electronic device 100. The key input devices 116 and 117 may include, for example, the first button member 116 and/or the second button member 117. In various embodiments, at least one of the first button member 116 or the second button member 117 may be formed of an electrode button that is capable of detecting a biometric signal (e.g., an electrocardiogram) of the user as a part (e.g., a finger) of the user's body makes contact with the electrode button.

Although not illustrated, the key input devices 116 and 117 may further include a wheel key (not illustrated) that is disposed on the front surface 110A of the housing 110 and is rotatable in at least one direction. For example, the wheel key may have a form (e.g., a circular frame) corresponding to the form of the front member 120, e.g. surrounding the front member 120. In various embodiments, the wheel key may be rotated by a user operation and may receive user inputs for implementing various functions of the electronic device 100.

In various embodiments, the electronic device 100 may not include all or some of the above-described key input devices 116 and 117, and the key input devices not included may be implemented in a different form, for example, in the form of a soft key on a display (e.g., the display 181 of FIG. 3). For example, the electronic device 100 may even include a soft key only.

The fastening member 190 may allow the electronic device 100 to be detachably worn on a part of the user's body (e.g., a wrist or an ankle). For example, the fastening member 190 may be connected to at least a portion of the housing 110 and may be configured to be detachably fastened in a state of surrounding a part of the user's body. For example, the fastening member 190 may include a first fastening member 190-1 and a second fastening member 190-2 that are coupled to opposite sides of the housing 110, respectively. The first fastening member 190-1 and the second fastening member 190-2 may be connected with or separated from each other.

The fastening member 190 may be formed in a band or strap form to surround a part of the user's body, e.g. a user's wrist. For example, the fastening member 190 may be formed of woven fabric, leather, rubber, urethane, metal, ceramic, or a combination of at least two of the aforementioned materials and may be implemented in an integrated form or may be implemented with a plurality of unit links that are movable relative to each other.

The fastening member 190 may be detachably connected to the housing 110. For example, the fastening member 190 may be detachably connected to at least a partial region of the housing 110 by using a locking member 191. According to various embodiments, the electronic device 100 may include various types of fastening members 190, and the fastening members 190 may be replaced depending on the user's taste and/or preference.

The fastening member 190 may include a fixing member 192, fixing-member fastening holes 193, a band guide member 194, and/or a band fixing ring 195. For example, the fixing member 192 may be configured to fix the housing 110 and the fastening member 190 to a part of the user's body (e.g., a wrist or an ankle). The fixing-member fastening holes 193 may fix the housing 110 and the fastening member 190 to the part of the user's body to correspond to the fixing member 192. The band guide member 194 may be configured to limit a movement range of the fixing member 192 when the fixing member 192 is fastened to one of the fixing-member fastening holes 193. Further, the band guide member 194 may limit a lateral movement of the first fastening member 190-1. Accordingly, the fastening member 190 may be closely fastened around the part of the user's body. The band fixing ring 195 may limit a movement range of the fastening member 190, i.e. the first fastening member 190-1, in the state in which the fixing member 192 is fastened to one of the fixing-member fastening holes 193.

According to various embodiments, the electronic device 100 may not include at least one component (e.g., the key input devices 116 and 117 or the biosensor modules 113, 114, and 115) among the components illustrated in FIGS. 1 and 2, or may additionally include other component(s). For example, the electronic device 100 may further include a connector hole (not illustrated). The connector hole (not illustrated) may accommodate a connector (e.g., a USB connector) for transmitting and/or receiving power and/or data with an external electronic device, or may accommodate a connector (e.g., an earphone connector) for transmitting and/or receiving an audio signal with an external electronic device. Alternatively or additionally, the electronic device 100 may comprise means for wirelessly receiving power to charge the same, i.e. a wireless charging module.

FIG. 3 is an exploded perspective view of the electronic device according to an embodiment. FIG. 4 is a sectional view of the electronic device according to an embodiment.

FIG. 4 is a sectional view of the electronic device taken along line A-A' illustrated in FIG. 2.

Referring to FIGS. 3 and 4, the electronic device 100 according to an embodiment may include the housing 110, the display 181, the bracket 182, the circuit board 150, the speaker module 160, the battery 183, and/or the microphone module 185.

FIGS. 3 and 4 may be views in which the fastening member (e.g., the fastening member 190 of FIGS. 1 and 2) of the electronic device 100 is omitted. Some of the components of the electronic device 100 illustrated in FIGS. 3 and 4 may be identical or similar to the components of the electronic device 100 illustrated in FIGS. 1 and 2, and repetitive descriptions will hereinafter be omitted.

The housing 110 may include the front member 120, the side member 140, and/or the rear member 130. For example, the front member 120 and the rear member 130 may be coupled to an upper portion (e.g., a first direction D1) and a lower portion (e.g., a second direction D2) of the side member 140, respectively, to form the inner space of the housing 110 in which the display 181, the bracket 182, and the circuit board 150, and/or the battery 183 are accommodated. The first direction D1 may be a direction toward the front member 120 (or, the display 181) with respect to the side member 140, and the second direction D2 may be a direction toward the rear member (or, a rear case 130-1) with respect to the side member 140. For example, a surface of the housing 110 that faces in the first direction D1 may be formed or defined by the front member 120, and a surface of the housing 110 that faces in the second direction D2 may be formed or defined by the rear member 130.

The display 181 may be disposed on a surface of the front member 120. For example, the display 181 may be attached to a rear surface (e.g., a surface facing in the second direction D2) of the front member 120, i.e. below the same. At least a portion of the front member 120 may be formed to be substantially transparent such that the display 181 is visually exposed in a front direction of the electronic device 100 (e.g., the first direction D1). For example, the front member 120 may be formed of a glass plate including various coating layers, or a polymer plate.

The side member 140 may surround the space between the front member 120 and the rear member 130, e.g. along an entire circumference. For example, the side member 140 may have an opening 141 formed therein in which the circuit board 150, the display 181, the bracket 182, or the battery 183 is accommodated. The front member 120 and the rear member 130 may be coupled to the upper portion and the lower portion of the side member 140 to face each other with the opening 141 therebetween. At least a portion of the side member 140 may include a metallic material and/or a polymer material. According to various embodiments, at least a portion of the side member 140 may be electrically connected with the circuit board 150 such that the side member 140 operates as an antenna radiator.

The side member 140 may have a through-hole 148 formed in a portion thereof. The through-hole 148 of the side member 140 may be aligned with a duct 1821 formed in the bracket 182. For example, the through-hole 148 may be fluidically connected with the duct 1821. Spaces formed by the through-hole 148 and the duct 1821 may be used as a path along which air flows between inside the housing 110 and outside the housing 110. Although not illustrated, according to various embodiments, a sensor module (e.g., an atmospheric pressure sensor) for sensing an environment external to the electronic device 100 may be disposed on the bracket 182 so as to be adjacent to the duct 1821, and air outside the housing 110 may move to the atmospheric pressure sensor through the through-hole 148 and the duct 1821.

The rear member 130 may include the rear case 130-1 coupled with the side member 140 and a cover 130-2 coupled, e.g. detachably mounted, to the rear case 130-1. For example, the rear member 130 may be formed in a structure in which the rear case 130-1 and the cover 130-2 are coupled. An outer surface of the rear case 130-1 and an outer surface of the cover 130-2 may form at least a portion of the rear surface of the electronic device 100 (e.g., the rear surface 110 of FIG. 2). For example, the cover 130-2 may be attached to at least a portion of the rear case 130-1. The speaker module 160 may be coupled to the rear member 130. For example, the speaker module 160 may be coupled to one side of the rear case 130-1.

The rear member 130 may provide a receiving space of a wireless charging module 189a and/or an optical sensor module 189b. For example, the rear member 130 may be configured such that the wireless charging module 189a and/or the optical sensor module 189b are located in a space between the rear case 130-1 and the cover 130-2. In various embodiments, the wireless charging module 189a and/or the optical sensor module 189b may be disposed adjacent to the cover 130-2. The rear member 130 may be formed of coated or colored glass, ceramic, a polymer, metal (e.g., aluminum, stainless steel (STS), or magnesium), or a combination of at least two of the aforementioned materials. For example, at least a portion of the cover 130-2 may be formed to be transparent such that light passes for operation of the optical sensor module 189b.

The display 181 (e.g., a display module 260 of FIG. 12) may be disposed between the front member 120 and the bracket 182. At least a portion of the display 181 may be visually exposed in a front direction of the housing 110 (e.g., the first direction D1) through the front member 120. For example, the display 181 may be attached to the rear surface (e.g., a surface facing in the second direction D2) of the front member 120.

The display 181 may be electrically connected to the circuit board 150. For example, the display 181 may be disposed such that one surface (e.g., a surface facing in the second direction D2) of the display 181 faces one surface (e.g., a surface facing in the first direction D1) of the circuit board 150 with the bracket 182 (or, the battery183) therebetween, and a connector 181c of the display 181 may pass through a portion of the bracket 182 and may be connected to the circuit board 150. The first direction D1 and the second direction D2 may be directions substantially perpendicular to opposite surfaces of the display 181. For example, the first direction D1 may be defined as the direction of a normal vector for a front surface of the display 181 that faces toward the front member 120, and the second direction D2 may be defined as the direction of a normal vector for a rear surface of the display 181 that faces toward the rear member 130.

The bracket 182 may be disposed in the housing 110 and may support other components of the electronic device 100 (e.g., the circuit board 150, the battery 183, and/or the microphone module 185). The bracket 182 may be disposed in the opening 141 of the side member 140 so as to be surrounded by the side member 140. The bracket 182 may be formed of a metallic material and/or a non-metallic (e.g., polymer) material.

The bracket 182 may be disposed between the rear member 130 and the display 181. The bracket 182 may provide a predetermined space (not illustrated) in which the battery 183 is accommodated. The microphone module 185 may be disposed on one side of the bracket 182. For example, the microphone module 185 may be coupled to the one side of the bracket 182 so as to be located adjacent to the microphone hole 111 (e.g., the microphone hole 111 of FIG. 1) formed in the rear case 130-1.

The battery 183 (e.g., a battery 289 of FIG. 12) may supply power to at least some of the components of the electronic device 100. For example, the battery 183 may include a secondary cell that is rechargeable. The battery 183 may be disposed in the housing 110 by being supported by the bracket 182. For example, at least a portion of the battery 183 may be surrounded by the bracket 182. In various embodiments, the battery 183 may be integrally disposed inside the electronic device 100, or may be disposed to be detachable from the electronic device 100.

The circuit board 150 may be supported by the bracket 182. For example, the circuit board 150 may be disposed between the rear member 130 and the bracket 182. The circuit board 150 may be disposed to face the rear member 130 and may be disposed to face the display 181 with the bracket 182 therebetween. For example, the circuit board 150 may be configured such that one surface (e.g., a surface facing in the first direction D1) is seated on the bracket 182 and an opposite surface (e.g., a surface facing in the second direction D2) faces the rear member 130 in a state of being spaced apart from the rear member 130. The first direction D1 and the second direction D2 may be directions substantially perpendicular to the opposite surfaces of the circuit board 150. However, the electronic device 100 is not limited to the illustrated embodiment and the circuit board 150 may also be disposed at a different position. The circuit board 150 may include, for example, a printed circuit board (PCB).

The circuit board 150 may have an electronic part located thereon, such as a processor (e.g., a processor 220 of FIG. 12), a memory (e.g., a memory 230 of FIG. 12), a communication module (e.g., a communication module 290 of FIG. 12), various types of sensor modules (e.g., the sensor module 276 of FIG. 12), an interface (e.g., an interface 277 of FIG. 12), and/or a connecting terminal (e.g., a connecting terminal 278 of FIG. 12). The processor may include, for example, one or more of a central processing unit, an application processor, a graphic processing unit (GPU), a sensor processor, or a communication processor. The memory may include, for example, a volatile memory or a non-volatile memory. The interface may include, for example, a high definition multimedia interface (HDMI), a universal serial bus (USB) interface, an SD card interface, or an audio interface. The interface may electrically or physically connect the electronic device 100 with an external electronic device and may include a USB connector, an SD connector, an MMC connector, and/or an audio connector.

The speaker module 160 may be coupled to the rear case 130-1 of the rear member 130. For example, the speaker module 160 may be coupled to a portion of the rear case 130-1 so as to be located adjacent to a speaker hole (e.g., the speaker hole 112 of FIG. 2) formed in the rear case 130-1. The speaker module 160 may output sound outside the housing 110 through the speaker hole 112.

Although not illustrated, the electronic device 100 may further include an antenna (not illustrated) (e.g., an antenna module 297 of FIG. 12) provided in the form of a flat plate or a thin film. The antenna may communicate with an external device, or may wirelessly transmit and receive power required for charging, and may transmit a magnetism-based signal including a short-range communication signal or payment data. For example, the antenna may include a near field communication (NFC) antenna, a wireless charging antenna, or a magnetic secure transmission (MST) antenna. However, the above-described antenna is illustrative, and the disclosure is not limited thereto. In various embodiments, the electronic device 100 may be configured such that at least a portion of the housing 110 functions as an antenna. For example, an antenna structure may be formed by a portion of the side member 140 and/or a portion of the bracket 182, or a combination thereof.

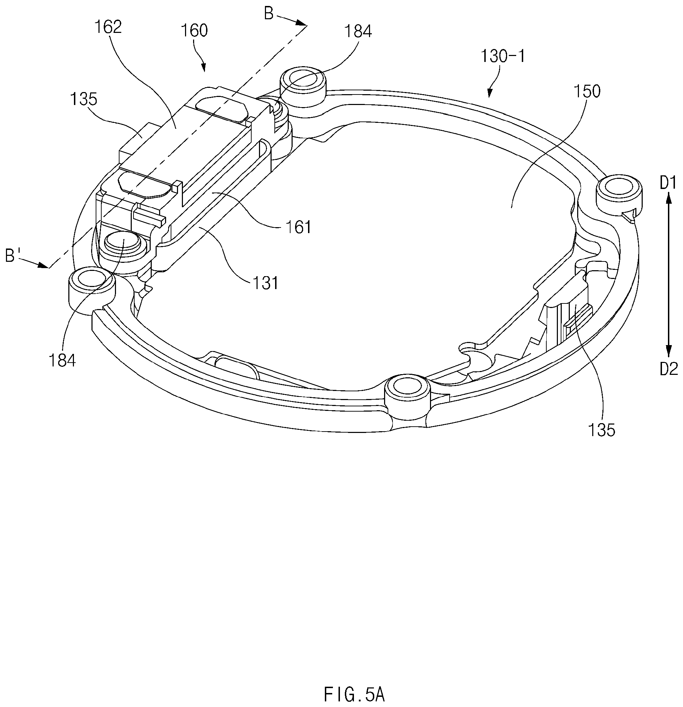

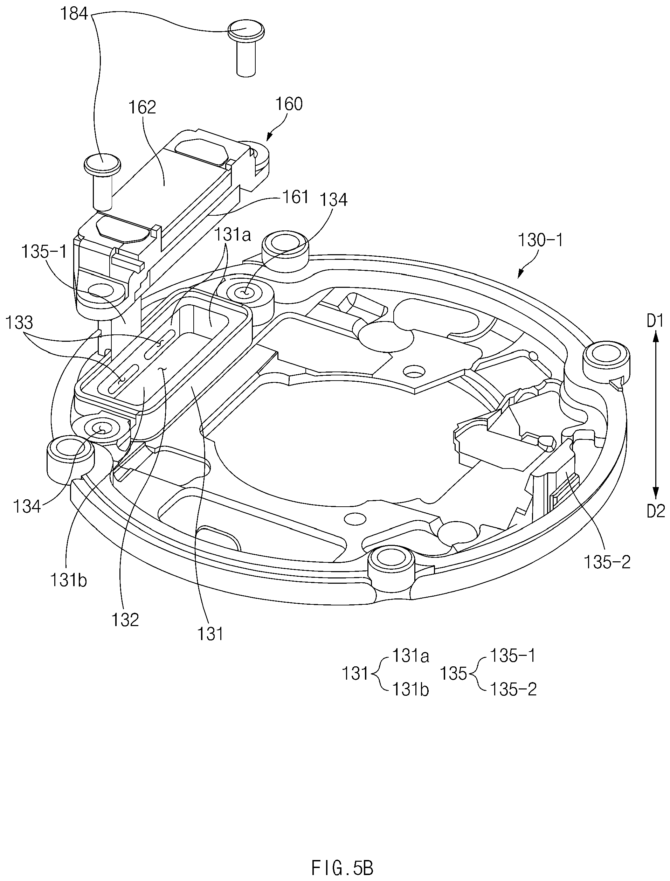

FIG. 5A is a view illustrating the rear case and the speaker module of the electronic device according to an embodiment. FIG. 5B is a view illustrating the rear case and the speaker module of the electronic device according to an embodiment.

FIG. 5A illustrates a state in which the speaker module is coupled to the rear case, and FIG. 5B illustrates a state in which the speaker module is separated from the rear case.

Referring to FIGS. 5A and 5B, the electronic device according to an embodiment (e.g., the electronic device 100 of FIGS. 1 to 4) may include the rear case 130-1, the speaker module 160 coupled to the rear case 130-1, and the circuit board 150 disposed on one surface (e.g., a surface facing in the first direction D1) of the rear case 130-1. Although not illustrated, the speaker module 160 may be electrically connected with the circuit board 150 through a connecting member (e.g., an FPCB).

The rear case 130-1 may support the speaker module 160. For example, the rear case 130-1 may include a speaker support part 131 on which the speaker module 160 is seated (or, supported). The rear case 130-1 may include, on opposite sides of the speaker support part 131, coupling holes 134 for coupling or fixing the speaker module 160. For example, coupling members 184 for fixing the speaker module 160 to the rear case 130-1 may be coupled (e.g., screw-coupled) to the coupling holes 134.

The speaker support part 131 may be formed adjacent to the periphery of the rear case 130-1. For example, the speaker support part 131 may be formed adjacent to one side of the rear case 130-1 in which the speaker hole (e.g., the speaker hole 112 of FIG. 2) is formed. The speaker support part 131 may extend from an upper surface of the rear case 130-1 that faces in the first direction D1. For example, the speaker support part 131 may be provided as a partition wall structure extending from the upper surface of the rear case 130-1 in the first direction D1. The speaker module 160 may be brought into contact with and supported on at least a portion of the speaker support part 131. For example, a main body 161 of the speaker module 160 may be partially brought into contact with a seating surface of the speaker support part 131 that faces in the first direction D1.

The speaker support part 131 may have a recess 132 formed therein. The recess 132 may be formed or defined by an inner surface 131a and a bottom surface 131b of the speaker support part 131. For example, the recess 132 may be a space surrounded by the inner surface 131a and the bottom surface 131b of the speaker support part 131. A sound hole 133 may be formed in the inner surface 131a of the speaker support part 131. For example, the sound hole 133 may extend from the inner surface 131a of the speaker support part 131 toward the outer surface of the rear case 130-1 and may be connected with the speaker hole 112. The recess 132, the sound hole 133, and the speaker hole 112 may be connected (or, fluidically connected) such that fluid (e.g., air or liquid) is capable of flowing therethrough. For example, sound generated from the speaker module 160 may pass through the recess 132 and the sound hole 133 and may be emitted (or, moved) outside the rear case 130-1 (e.g., the housing 110 of FIGS. 1 and 2) through the speaker hole 112.

The rear case 130-1 may be coupled with the side member (e.g., the side member 140 of FIGS. 1 to 4). The rear case 130-1 may include a coupling protrusion 135 to which the side member 140 is coupled. For example, the coupling protrusion 135 may extend from the peripheral portion of the rear case 130-1 in the first direction D1. A portion of the side member 140 may be hooked to the coupling protrusion 135. For example, a groove (not illustrated) may be formed on the coupling protrusion 135, and a locking jaw hooked to the groove of the coupling protrusion 135 may be formed on the side member 140.

Two coupling protrusions 135 may be disposed to face each other. For example, the coupling protrusion 135 may include a first coupling protrusion 135-1 located adjacent to the speaker support part 131 and a second coupling protrusion 135-2 facing the first coupling protrusion 135-1, i.e. opposite to the same. The first coupling protrusion 135-1 may extend from the peripheral portion of the rear case 130-1 on which the speaker support part 131 is formed, and at least a portion of the first coupling protrusion 135-1 may be connected with the speaker support part 131. For example, the first coupling protrusion 135-1 may be connected with the seating surface of the speaker support part 131 that faces in the first direction D1. The first coupling protrusion 135-1 may face the speaker module 160 seated on the speaker support part 131. However, the illustrated embodiment is illustrative, and the number and positions of coupling protrusions 135 are not limited to the illustrated embodiment.

The speaker module 160 may be coupled to the rear case 130-1. For example, the speaker module 160 may be seated on the speaker support part 131 of the rear case 130-1 and may be coupled to the rear case 130-1 through the coupling members 184. The speaker module 160 may be disposed on the speaker support part 131 such that a lower surface facing in a direction in which sound is substantially output faces toward the recess 132 (or, the bottom surface 131b of the speaker support part 131). For example, the lower surface of the speaker module 160 may face in the second direction D2 and may be a surface from which sound is substantially output.

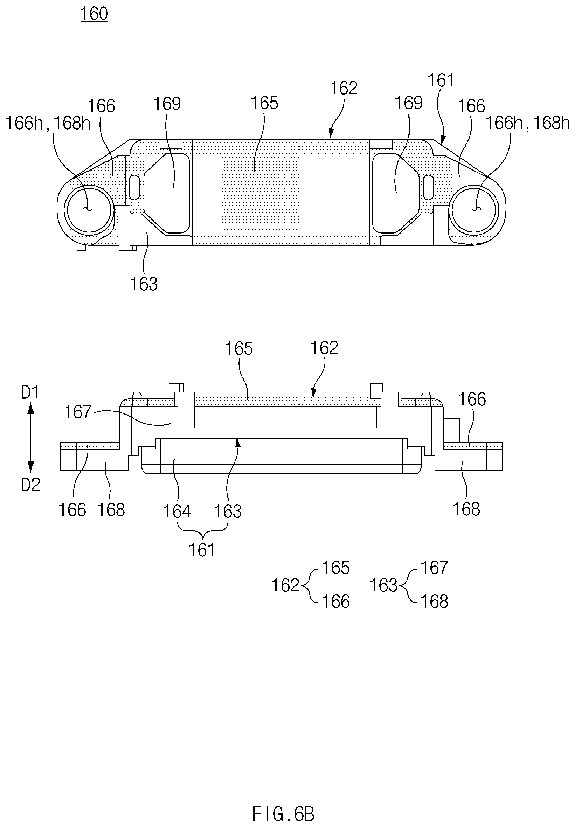

The speaker module 160 may include the main body 161 including a speaker unit (e.g., a speaker unit 164 of FIGS. 6B, 7, and 8) and a yoke 162 surrounding at least a portion of an outer surface of the main body 161. The speaker unit of the main body 161 may include a magnet, a voice coil, a diaphragm, and/or a protector and may indicate, for example, a core speaker. For example, the diaphragm may be provided to face in substantially the same direction as the lower surface of the speaker module 160.

The yoke 162 may be disposed to surround at least a portion of the main body 161 and may form one surface of the speaker module 160. For example, the yoke 162 may form or define an upper surface (e.g., a surface facing in the first direction D1) of the speaker module 160. The yoke 162 may serve to improve speaker sound performance by controlling a flow of a magnetic force generated by the magnet, which is a part constituting the speaker unit, and protecting the magnetic force. Further, the yoke 162 improves overall stability and allows a simplified assembly process. The yoke 162 may have a plate shape made of metal that surrounds the outside of the magnet to protect the magnetic force. The yoke 162 may fix a magnet attached to one surface thereof. For example, the yoke 162 may be formed of steel plate cold commercial (SPCC), a stainless steel plate (stainless steel (STS) or stainless use steel (SUS)), or a metallic material having rigidity, but is not limited thereto.

The yoke 162 may include wing-shaped coupling portions extending from a flat plate. The speaker module 160 may not be fixed to the inside of the electronic device by a separate frame (e.g., a polycarbonate (PC) frame) but rather by the extending yoke 162 made of a metallic material. Accordingly, a structure that is not deformed by external pressure generated in a process of coupling the speaker module 160 may be formed.

The yoke 162, together with the main body 161, may be coupled or fixed to the rear case 130-1. For example, the yoke 162 and the main body 161 may be coupled to the rear case 130-1 through the coupling members 184 in a state of at least partially overlapping each other or in a stacked state. The speaker module 160 may be coupled to the rear case 130-1 as the coupling members 184 pass through portions of the yoke 162 and the main body 161 and are fixed to the coupling holes 134. According to the illustrated embodiment, the coupling members 184 may pass through the portions of the yoke 162 and the main body 161 in the second direction D2 and may be fastened to the coupling holes 134, and the yoke 162 may be provided to support the main body 161 in the first direction D1 with respect to the main body 161. However, the direction in which the speaker module 160 is disposed is not limited to the illustrated embodiment.

The yoke 162, which is coupled to the rear case 130-1 together with the main body 161, may support the main body 161 in a direction toward the speaker support part 131. For example, the yoke 162 may provide predetermined pressure (or, support force) to the main body 161 in the second direction D2 and may minimize or prevent a phenomenon in which the main body 161 is pushed or lifted in a direction away from the speaker support part 131 (e.g., the first direction D1) by the pressure of fluid introduced from the outside through the speaker hole 112 (e.g., the path along which the speaker hole 112, the sound hole 133, and the recess 132 are connected), thereby improving stability and robustness. A structure in which the yoke 162 and the main body 161 of the speaker module 160 are coupled to the rear case 130-1 will be described below in detail with reference to FIGS. 6B, 7, and 8.

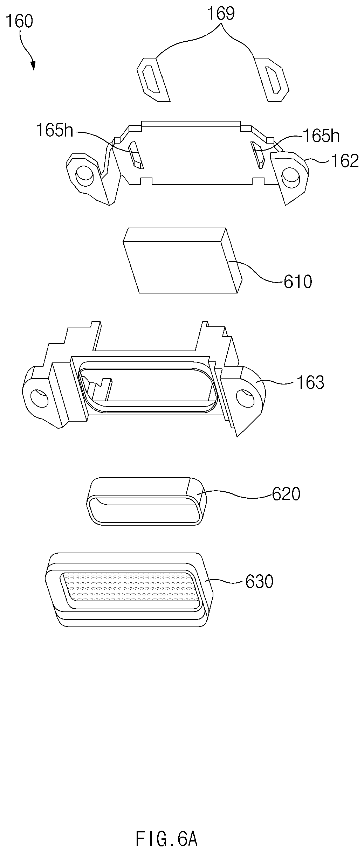

FIG. 6A is a view illustrating an internal configuration of the speaker module according to an embodiment.

Referring to FIG. 6A, the speaker module 160 may include the yoke 162, a speaker frame 163, a magnet 610, a voice coil 620, and a diaphragm 630. The magnet 610, the voice coil 620, and the diaphragm 630 may be collectively referred to as the speaker unit.

Mesh members 169 may have a shape that allows ventilation and may be attached to one surface of the yoke 162. The mesh members 169 may adjust the amount of air flowing through ventilation holes 165h of the yoke 162. The mesh members 169 may prevent infiltration of foreign matter into the speaker module 160 through the ventilation holes 165h.

The magnet 610 may be coupled to an inner surface of the yoke 162. A magnetic force generated by the magnet 610 may move along a magnetic path formed through the yoke 162. The magnetic force may be protected through the yoke 162, and thus acoustic performance may be maintained. Although FIG. 6A illustrates an example that the magnet 610 is implemented with one magnet, the disclosure is not limited thereto. For example, the magnet 610 may be implemented with a plurality of magnets.

The voice coil 620 may surround the magnet 610. When an electric current flows through the voice coil 620, a magnetic field may be generated. The diaphragm 630 may be vibrated by an interaction between the magnetic field of the voice coil 620 and the magnetic field of the magnet 610 to generate sound.

As an electrical signal is applied, the diaphragm 630 may be vibrated by the interaction between the magnetic field generated by the voice coil 620 and the magnetic field of the magnet 610. The diaphragm 630 may generate sound corresponding to the applied electrical signal.

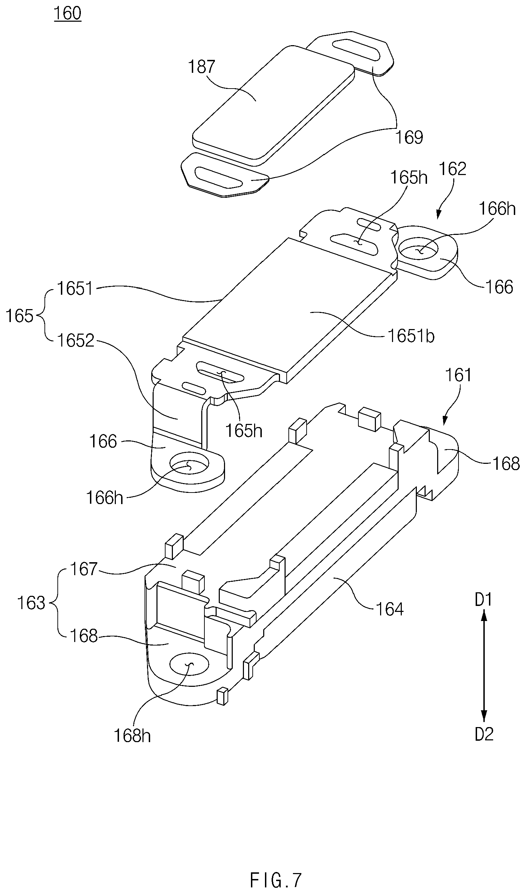

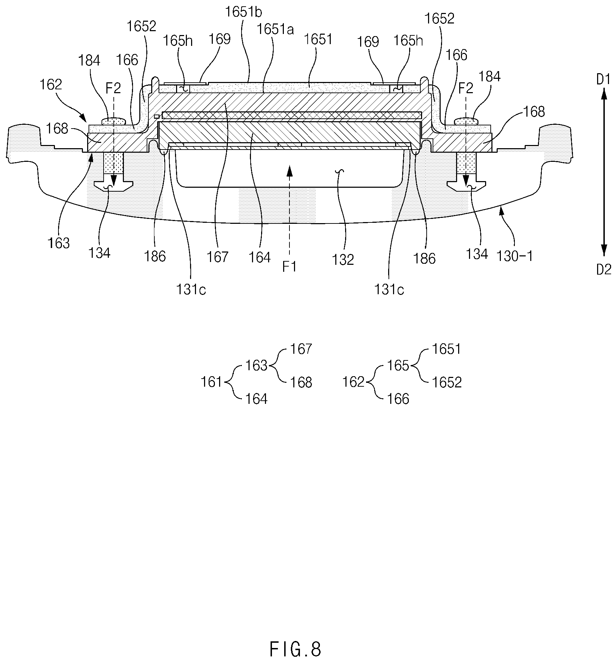

FIG. 6B is a view illustrating the speaker module of the electronic device according to an embodiment. FIG. 7 is a view illustrating the speaker module of the electronic device according to an embodiment. FIG. 8 is a view illustrating a coupling structure of the rear case and the speaker module of the electronic device according to an embodiment.

FIG. 6B illustrates a front view and a plan view of the speaker module. FIG. 7 is an exploded perspective view of the speaker module. FIG. 8 is a sectional view of the rear case and the speaker module taken along line B-B' illustrated in FIG. 5A.

Referring to FIGS. 6B, 7, and 8, the electronic device according to an embodiment (e.g., the electronic device 100 of FIGS. 1 to 4) may include the rear case 130-1 and the speaker module 160 coupled to the rear case 130-1. The speaker module 160 may include the main body 161 and the yoke 162.

The rear case 130-1 and the speaker module 160 illustrated in FIGS. 6A, 6B, 7, and 8 may be identical or similar to the rear case 130-1 and the speaker module 160 illustrated in FIGS. 5A and 5B, and repetitive descriptions will hereinafter be omitted.

The main body 161 may include a speaker frame 163 and the speaker unit 164. The main body 161 may be provided in a structure in which the speaker unit 164 is mounted on the speaker frame 163. For example, at least a portion of the speaker unit 164 may be accommodated in the speaker frame 163. The yoke 162 may be disposed on one surface of the speaker frame 163 that faces in the first direction D1, and the speaker unit 164 may be disposed on one surface of the speaker frame 163 that faces in the second direction D2. For example, the speaker unit 164 and the yoke 162 may be disposed to face each other with at least a portion of the speaker frame 163 therebetween. In the embodiment illustrated in FIG. 8, the main body 161 may be coupled to the rear case 130-1 such that a surface of the speaker unit 164 from which sound is output faces in the second direction D2. However, the coupling direction of the main body 161 is not limited thereto.

The speaker frame 163 may include a first base part 167 and first coupling parts 168 extending from the first base part 167. For example, the first coupling parts 168 may extend from opposite end portions of the first base part 167 that face away from each other in a long side direction (or, a width direction) of the first base part 167. The first coupling parts 168 may be paired to be symmetrical to each other with respect to the first base part 167.

The first base part 167 and the first coupling parts 168 may surround at least a portion of the speaker unit 164. According to the illustrated embodiment, each of the first coupling parts 168 may be connected to the first base part 167 with a step. However, the shape of the speaker frame 163 is not limited to the illustrated embodiment. For example, the speaker frame 163 may also comprise a slightly rising edge rather than a step. The first coupling parts 168 may be coupled to the rear case 130-1. For example, the first coupling parts 168 may be fixedly coupled to the rear case 130-1 through the coupling members 184. The first coupling parts 168 may have first through-hole 168h formed therein into which the coupling members 184 are inserted. In various embodiments, the speaker frame 163 may be formed of an injection material, but is not limited thereto.

The speaker unit 164 may be a part that substantially outputs sound. The speaker unit 164 may be mounted on the speaker frame 163. According to various embodiments, the speaker unit 164 may be configured to generate sound corresponding to an applied electrical signal as the diaphragm 630 is vibrated by an interaction between a magnetic field generated by the voice coil 620 and a magnetic field of the magnet 610. The speaker unit 164 may be disposed such that the surface from which sound is output faces toward the recess 132 of the speaker support part 131. At least a portion of the speaker unit 164 may be brought into contact with a seating surface (or, contact surface) 131c of the speaker support part 131. For example, the seating surface 131c of the speaker support part 131 may be connected with the inner surface 131a of the speaker support part 131 and may face the speaker module 160 (e.g., the speaker unit 164).

A sealing member 186 may be disposed between the speaker unit 164 and the speaker support part 131. For example, the sealing member 186 may be disposed between the seating surface 131c of the speaker support part 131 and the speaker unit 164 and may be pressed as the speaker module 160 is seated on the speaker support part 131. For example, the sealing member 186 may be pressed between the speaker unit 164 and the seating surface 131c as the speaker frame 163 is coupled to the rear case 130-1. The sealing member 186 pressed between the speaker unit 164 and the seating surface 131c may provide a waterproof function for the inside of the electronic device 100. For example, the sealing member 186 may block introduction of fluid through a space between the speaker unit 164 and the seating surface 131c. The sealing member 186 may be formed of soft rubber, silicone, or a polymer material, but is not limited thereto. Although not illustrated, according to various embodiments, a blocking member (e.g., a waterproof membrane) may be additionally disposed between the speaker unit 164 and the recess 132.

The yoke 162 may include a second base part 165 and second coupling parts 166 extending from the second base part 165. For example, the second coupling parts 166 may extend from opposite end portions of the second base part 165 that face away from each other in a long side direction of the second base part 165. The second coupling parts 166 may be paired to be symmetrical to each other with respect to the second base part 165. The yoke 162 may be formed in a shape corresponding to the speaker frame 163 of the main body 161. The yoke 162 according to an embodiment of the disclosure may provide a function of stably fixing (or, coupling) the speaker module 160 to the rear case 130-1 by the second coupling portions 166 at the same time as providing a function of designing (or, controlling) a magnetic path while surrounding the main body 161 by the second base part 165.

The second base part 165 may surround an upper surface (e.g., a surface facing in the first direction D1) and/or at least a portion of a side surface (e.g., a surface extending substantially perpendicular to the upper surface) of the main body 161 (e.g., the first base part 167 of the speaker frame 163). For example, the second base part 165 may include a first portion 1651 making contact with the upper surface of the first base part 167 and second portions 1652 making contact with the side surface of the first base part 167. The second base part 165 may have a shape in which the second portions 1652 substantially vertically extend from opposite end portions of the first portion 1651 that face away from each other in a long side direction of the first portion 1651. For example, the second base part 165 may have a shape in which the pair of second portions 1652 are symmetrical to each other with respect to the first portion 1651.

The first portion 1651 of the second base part 165 may be substantially parallel to the upper surface of the speaker frame 163 and may face the recess 132 with a portion of the main body 161 (e.g., the first base part 167 and the speaker unit 164) therebetween. The pair of second portions 1652 of the second base part 165 may be substantially parallel to the side surface of the speaker frame 163 and may face each other with the first base part 167 of the main body 161 therebetween. In the embodiment illustrated in FIG. 8, in response to the direction in which the main body 161 is coupled to the rear case 130-1, the yoke 162 may be coupled to the rear case 130-1 such that the first portion 1651 is substantially perpendicular to the first direction D1 and the second direction D2 and the second portions 1652 are substantially parallel to the first direction D1 and the second direction D2.

The first portion 1651 of the second base part 165 may include a first surface 1651a making contact with the main body 161 and a second surface 1651b facing away from the first surface 1651a. The first surface 1651a may make contact with the upper surface of the speaker frame 163. For example, the first surface 1651a may face toward the first base part 167 of the speaker frame 163. In the embodiment illustrated in FIG. 8, in response to the direction in which the main body 161 is coupled to the rear case 130-1, the yoke 162 may be coupled to the rear case 130-1 such that the first surface 1651a faces in the second direction D2 and the second surface 1651b faces in the first direction D1.

The second coupling parts 166 may extend from the second portions 1652 of the second base part 165. For example, the second coupling parts 166 may extend from the second portions 1652 of the second base part 165 so as to be substantially perpendicular to the second portions 1652. The yoke 162 may have a shape in which the pair of second coupling parts 166 are symmetrical to each other with respect to the second base part 165. The second coupling parts 166 may have second through-hole 166h formed therein into which the coupling members 184 are inserted. The second coupling parts 166 of the yoke 162 may be substantially parallel to the first coupling parts 168 of the speaker frame 163. The second coupling parts 166 may be brought into contact with the first coupling parts 168. The second coupling parts 166 may overlap or be stacked on at least portions of the first coupling parts 168 in the first direction D1 and the second direction D2. For example, the second through-holes 166h of the second coupling parts 166 and the first through-holes 168h of the first coupling parts 168 may be aligned in the first direction D1 and the second direction D2.

Ventilation holes 165h may be formed in the second base part 165 of the yoke 162. For example, the ventilation holes 165h may be formed through the first portion 1651 of the second base part 165. The ventilation holes 165h may substantially vertically penetrate partial regions of the first portion 1651 from the first surface 1651a to the second surface 1651b. The ventilation holes 165h may overlap at least portions of the first base part 167 of the speaker frame 163 in a direction substantially perpendicular to the first portion 1651. The ventilation holes 165h may provide a movement path of air to enable air to flow between inside the speaker module 160 and outside the speaker module 160. For example, the ventilation holes 165h may serve as a path along which air flows such that vibration of the diaphragm is smoothly performed in an operation of the speaker module 160. Mesh members 169 may be disposed over the ventilation holes 165h. The mesh members 169 may adjust the amount of air flowing through the ventilation holes 165h and may prevent foreign matter from being introduced into the main body 161 through the ventilation holes 165h. The mesh members 169 may be formed in a shape capable of ventilation.

Referring to FIG. 7, the speaker module 160 may further include a sheet 187 attached to a portion of the yoke 162. For example, the sheet 187 may be disposed on the first portion 1651 (e.g., the second surface 1651b) of the second base part 165. The sheet 187 may be attached to the second surface 1651b of the first portion 1651 so as to be located between the pair of mesh members 169 (or, between the pair of ventilation holes 165h). The sheet 187 may have a predetermined thickness. The sheet 187 may be used to compensate for a thickness difference with another structure or component or fill a gap between the speaker module 160 and another structure when the speaker module 160 is disposed in the housing 110. The sheet 187 may be formed of PORON. However, without being limited thereto, the speaker module 160 may not include the sheet 187 according to various embodiments.

Referring to FIG. 8, the speaker module 160 may be coupled to the rear case 130-1 such that the surface from which sound is output faces in the second direction D2. The speaker module 160 may be coupled to the rear case 130-1 as the yoke 162 and at least a portion of the main body 161 are fixed to the rear case 130-1. The first coupling parts 168 of the main body 161 and the second coupling parts 166 of the yoke 162 may be coupled or fixed to the rear case 130-1 through the coupling members 184. The first coupling parts 168 may overlap or be stacked on the coupling holes 134 of the rear case 130-1 in the first direction D1, and the second coupling parts 166 may overlap or be stacked on the first coupling parts 168 in the first direction D1. The coupling members 184 may sequentially pass through the second coupling parts 166 and the first coupling parts 168 and may be fastened to the coupling holes 134 of the rear case 130-1. For example, the coupling members 184 may be screws. The coupling members 184 may be screw-coupled to the coupling holes 134, but are not limited thereto. For example, the coupling members 184 may also be rivets or bolts.

As the coupling members 184 pass through the second through-holes 166h of the second coupling parts 166 and the first through-holes 168h of the first coupling parts 168 and are fastened to the coupling holes 134, the coupling members 184 may apply predetermined pressure F2 to the first coupling parts 168 and the second coupling parts 166 in a direction toward the rear case 130-1 (e.g., the second direction D2). The coupling members 184 may be coupled to the coupling holes 134 in a direction (e.g., the second direction D2) parallel to the direction in which the lower surface of the speaker unit 164, from which sound is output, faces. For example, the direction of the pressure F2 applied to the first coupling parts 168 and the second coupling parts 166 may be the same as the direction in which the surface of the speaker unit 164 from which sound is output faces. For example, the direction of the pressure F2 applied to the first coupling parts 168 and the second coupling parts 166 may be opposite to the direction of external pressure F1 (e.g., water pressure or air pressure) applied to the speaker unit 164 by fluid introduced into the recess 132 of the rear case 130-1 from the outside (e.g., liquid or gas introduced through the speaker hole 112 of FIG. 2 or the sound hole 133 of FIG. 5B).

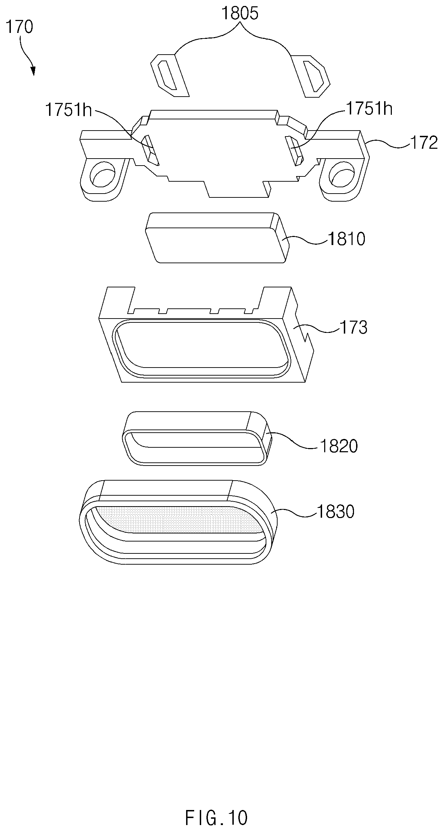

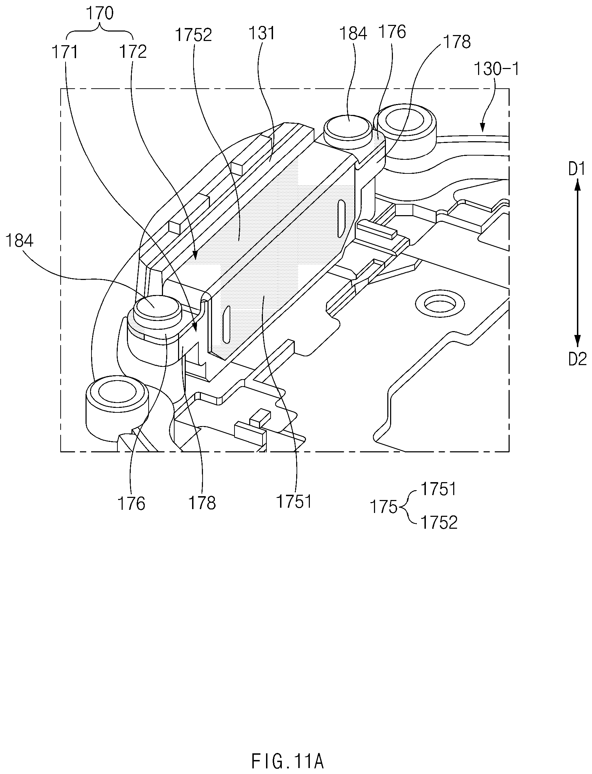

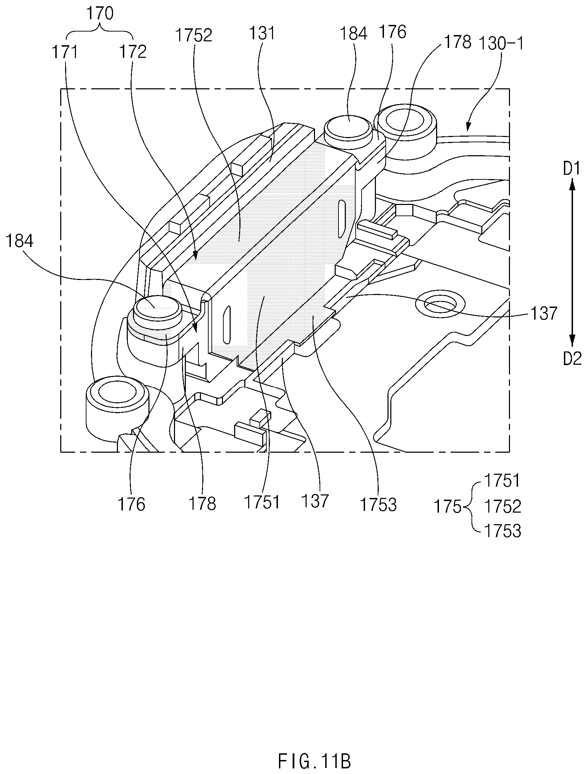

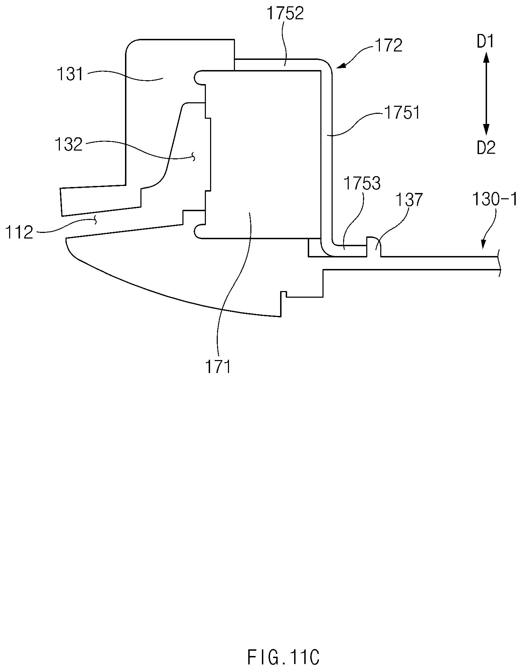

In the embodiment illustrated in FIG. 8 (e.g., refer to FIGS. 5A and 5B), the speaker module 160 may be coupled to (or, mounted on) the rear case 130-1 in a horizontal direction (e.g., a direction parallel to the rear case 130-1). For example, the speaker module 160 may be disposed such that the surface from which sound is output faces the upper surface (e.g., a surface facing in the first direction D1) of the rear case 130-1. According to the embodiment in which the speaker module 160 is mounted in the horizontal direction, the surface of the speaker module 160 from which sound is output and/or the first portion 1651 of the yoke 162 may be substantially parallel to the display (e.g., the display 181 of FIG. 4) and/or the circuit board (e.g., the circuit board 150 of FIG. 4). Since the direction of the external pressure F1 applied to the speaker module 160 by fluid introduced into the recess 132 is opposite to the fastening direction of the coupling members 184, the speaker module 160 may be firmly coupled so as not to be pushed by the external pressure F1, and waterproof performance may be easily secured and improved. However, a coupling direction of the speaker module 160 is not limited to the illustrated embodiment. According to various embodiments (refer to FIGS. 10 and 11), the speaker module 160 may be coupled to the rear case 130-1 in a vertical direction (e.g., a direction perpendicular to the rear case 130-1).

As the coupling parts (e.g., the second coupling parts 166) are formed on the yoke 162, which is a component for magnetic path design, and the coupling parts 166 of the yoke 162 are fixed to the rear case 130-1 together with the main body 161, the speaker module 160 according to the embodiment of the disclosure may be stably coupled to (or, supported on) the rear case 130-1 so as not to be pushed by water pressure or air pressure. Accordingly, required waterproof performance (e.g., 5atm waterproof) may be secured even without a separate support structure (support plate) for supporting the speaker module 160 such that the speaker module 160 is not pushed in order to secure a waterproof function. Furthermore, since a separate part is not additionally coupled, the speaker module 160 formed as a single assembly may be screw-coupled to the rear case 130-1 at the same time as being assembled to the rear case 130-1. Accordingly, defects depending on assembly may be minimized or prevented, and effects of simplifying an assembly process and reducing costs may be achieved.

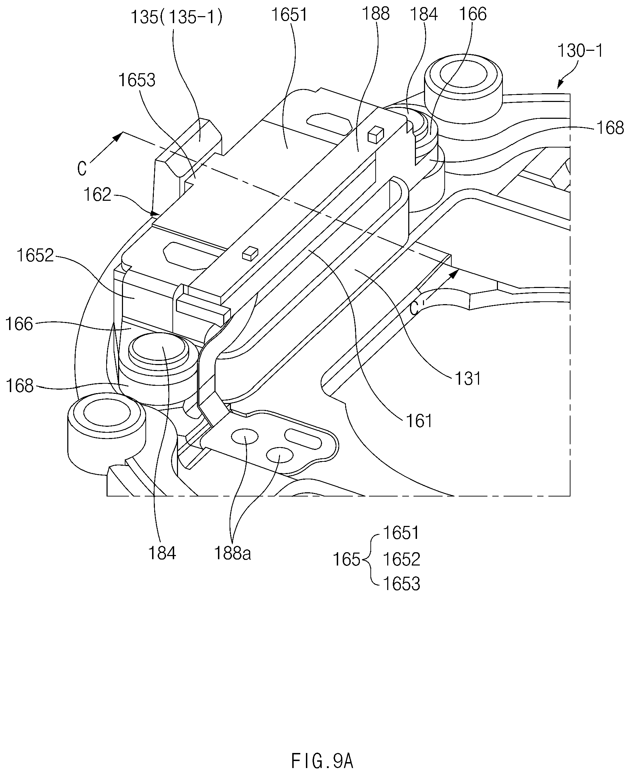

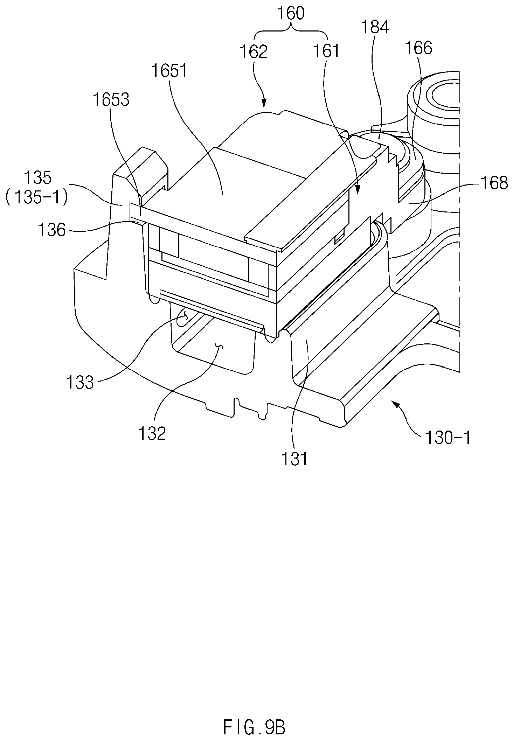

FIG. 9A is a view illustrating the rear case and the speaker module of the electronic device according to an embodiment. FIG. 9B is a view illustrating the rear case and the speaker module of the electronic device according to an embodiment.

FIG. 9B is a sectional view of the rear case and the speaker module taken along line C-C' illustrated in FIG. 9A.

Referring to FIGS. 9A and 9B, the electronic device according to an embodiment (e.g., the electronic device 100 of FIGS. 1 to 4) may include the rear case 130-1, the speaker module 160 coupled to the rear case 130-1, and a connecting member 188 that electrically connects the speaker module 160 with the circuit board (e.g., the circuit board 150 of FIG. 5A). The connecting member 188 may include a conductive region 188a that makes electrical contact with the circuit board 150. For example, the connecting member 188 may be formed of a flexible printed circuit board (FPCB), but is not limited thereto.

FIGS. 9A and 9B are views illustrating an embodiment in which a hook fastening structure (e.g., a third portion 1653 and a locking groove 136) in addition to the screw fastening structure through the coupling members 184 are added between the yoke 162 and the rear case 130-1. The rear case 130-1 and the speaker module 160 illustrated in FIGS. 9A and 9B may be identical or similar to the rear case 130-1 and the speaker module 160 illustrated in FIGS. 5A, 5B, 6, 7, and 8. Repetitive descriptions will hereinafter be omitted, and the following description will be focused on added contents.

The speaker module 160 may include the main body 161 and the yoke 162. The main body 161 may include the first coupling parts 168 coupled to the rear case 130-1. The yoke 162 may include the second base part 165 and the second coupling parts 166 extending from the second base part 165. The second base part 165 may include the first portion 1651, the second portions 1652 extending from the opposite ends of the first portion 1651 that face away from each other in the long side direction of the first portion 1651, and a third portion 1653 protruding from one end of the first portion 1651 that faces in a short side direction of the first portion 1651. For example, the second portions 1652 may extend from the first portion 1651 so as to be substantially perpendicular to the first portion 1651. The third portion 1653 may protrude substantially in parallel from a portion of an edge facing the coupling protrusion 135 of the rear case 130-1 among edges of the first portion 1651 in the short side direction.

The third portion 1653 of the yoke 162 may be a locking protrusion (or, a hook) for hook fastening of the yoke 162 and the rear case 130-1. The rear case 130-1 may include the coupling protrusion 135. The third portion 1653 of the yoke 162 may be hooked to the coupling protrusion 135. In various embodiments, the coupling protrusion 135 may be a protrusion or structure for coupling with the side member (e.g., the side member 140 of FIGS. 3 and 4). For example, the coupling protrusion 135 of FIGS. 9A and 9B may be referred to as the first coupling protrusion 135-1 of FIG. 5B. The coupling protrusion 135 may have, on the surface facing toward the speaker module 160, the locking groove 136 into which a portion of the second base part 165 of the yoke 162 is inserted. For example, the locking groove 136 may be formed in a shape corresponding to the third portion 1653 of the yoke 162, and at least part of the third portion 1653 may be inserted into the locking groove 136. The third portion 1653 may be hooked or locked to the locking groove 136.

As the second coupling parts 166 of the yoke 162 are screw-coupled to the rear case 130-1 through the coupling members 184 and the second base part 165 of the yoke 162 is hooked to the rear case 130-1 through the locking protrusion (e.g., the third portion 1653) and the locking groove 136, the yoke 162 according to the embodiment illustrated in FIGS. 9A and 9B may stably and firmly fix the speaker module 160 to the rear case 130-1.

FIG. 10 is a view illustrating an internal configuration of a speaker module according to an embodiment.

Referring to FIG. 10, the speaker module 170 may include a yoke 172, a speaker frame 173, a magnet 1810, a voice coil 1820, and a diaphragm 1830. The magnet 1810, the voice coil 1820, and the diaphragm 1830 may be collectively referred to as the speaker unit.

Mesh members 1805 may have a shape that allows ventilation and may be attached to one surface of the yoke 172. The mesh members 1805 may adjust the amount of air flowing through ventilation holes 1751h of the yoke 172. The mesh members 1805 may prevent infiltration of foreign matter into the speaker module 170 through the ventilation holes 1751h.

The magnet 1810 may be coupled to an inner surface of the yoke 172. A magnetic force generated by the magnet 1810 may move along a magnetic path formed through the yoke 172. The magnetic force may be protected through the yoke 172, and thus speaker acoustic performance may be maintained. Although FIG. 10 illustrates an example that the magnet 1810 is implemented with one magnet, the disclosure is not limited thereto. For example, the magnet 1810 may be implemented with a plurality of magnets.

The voice coil 1820 may surround the magnet 1810. When an electric current flows through the voice coil 1820, a magnetic field may be generated. The diaphragm 1830 may be vibrated by an interaction between the magnetic field of the voice coil 1820 and the magnetic field of the magnet 1810 to generate sound.

As an electrical signal is applied, the diaphragm 1830 may be vibrated by the interaction between the magnetic field generated by the voice coil 1820 and the magnetic field of the magnet 1810. The diaphragm 1830 may generate sound corresponding to the applied electrical signal.

FIG. 11A is a view illustrating a rear case and a speaker module of an electronic device according to an embodiment. FIG. 11B is a view illustrating the rear case and the speaker module of the electronic device according to an embodiment. FIG. 11C is a view illustrating the rear case and the speaker module of the electronic device according to an embodiment.

Referring to FIGS. 11A, 11B, and 11C, the electronic device according to an embodiment (e.g., the electronic device 100 of FIGS. 1 to 4) may include the rear case 130-1 and the speaker module 170 coupled to the rear case 130-1 (e.g., the speaker module 160 of FIGS. 4, 5A, 5B, 6B, 7, and 8).

Unlike the speaker module 160 according to the embodiment illustrated in FIGS. 5A, 5B, and 8, the speaker module 170 according to the embodiment illustrated in FIGS. 11A, 11B, and 11C may be coupled to or mounted on the rear case 130-1 in a vertical direction. The speaker module 170 of FIGS. 11A, 11B, and 11C may be the same as the speaker module 160 of FIGS. 5A, 5B, and 8 except for a coupling direction and some shapes. Repetitive descriptions will hereinafter be omitted, and the following description will be focused on changed contents.

The rear case 130-1 may include a speaker support part 131 on which the speaker module 170 is seated or to which the speaker module 170 is coupled. The speaker support part 131 may extend from an edge on one side of the rear case 130-1 in the first direction D1 (e.g., the direction toward the front member 120 or the display 181 in FIG. 4). A recess 132 (e.g., the recess 132 of FIG. 5B) that is open in a direction perpendicular to the first direction D1 and the second direction D2 may be formed on the speaker support part 131. At least a portion of the speaker module 170 may be accommodated in the recess 132 as the speaker module 170 is coupled to the speaker support part 131. The recess 132 may be connected (or, fluidically connected) with a speaker hole 112 formed in the rear case 130-1 (e.g., the speaker hole 112 of FIG. 2). For example, sound output from the speaker module 170 may be emitted outside the electronic device 100 through the recess 132 and the speaker hole 112.

The speaker module 170 may be coupled to the rear case 130-1 in the vertical direction. For example, the speaker module 170 may be coupled to the rear case 130-1 in a direction in which a surface from which sound is output is perpendicular to the rear case 130-1. The speaker module 170 may be disposed such that the surface from which sound is output faces the speaker support part 131. For example, the speaker module 170 may be coupled to the rear case 130-1 such that the surface from which sound is output faces in a direction perpendicular to the first direction D1 and the second direction D2 (e.g., the direction of the side surface 110C of FIGS. 1 and 2).

The speaker module 170 may include a main body 171 including first coupling parts 178 and a yoke 172 disposed to surround the main body 171 and coupled to the rear case 130-1 together with the main body 171. Although not illustrated, the main body 171 may include a speaker frame (e.g., the speaker frame 163 of FIGS. 6B, 7, and 8) and a speaker unit (e.g., the speaker unit 164 of FIGS. 7 and 8), and the first coupling parts 178 may be portions of the speaker frame 163. The first coupling part 178 may be coupled or fixed to the rear case 130-1 together with portions of the yoke 172 through coupling members 184.

The yoke 172 may include a second base part 175 and second coupling parts 176 extending from the second base part 175. The second base part 175 may include a first portion 1751 and a second portion 1752 extending from one side of the first portion 1751 so as to be substantially perpendicular to the first portion 1751. The first portion 1751 may make contact with an upper surface of the main body 171 (e.g., a surface facing away from the surface from which sound is output), and the second portion 1752 may make contact with a side surface of the main body 171 (e.g., a surface extending substantially perpendicular to the upper surface of the main body 171). In the embodiment illustrated in FIGS. 11A, 11B, and 11C, in response to the direction in which the main body 171 is coupled to the rear case 130-1, the yoke 172 may be coupled to the rear case 130-1 such that the first portion 1751 is substantially parallel to the first direction D1 and the second direction D2 and the second portion 1752 is substantially perpendicular to the first direction D1 and the second direction D2.

The second coupling parts 176 may extend from the second portion 1752 of the second base part 175. For example, the second coupling parts 176 may extend substantially in parallel from opposite end portions of the second portion 1752 that face away from each other in a long side direction of the second portion 1752. The yoke 172 may have a shape in which the pair of second coupling parts 176 are symmetrical to each other with respect to the second base part 175. The second coupling parts 176 of the yoke 172 may be substantially parallel to the first coupling parts 178 of the main body 171. The second coupling parts 176 may be brought into contact with the first coupling parts 178. The second coupling parts 176 may overlap or be stacked on at least portions of the first coupling parts 178 in the first direction D1 and the second direction D2. The coupling members 184 may sequentially pass through the second coupling parts 176 and the first coupling parts 178 and may be fastened to the rear case 130-1. For example, the coupling members 184 may be screws. The coupling members 184 may be screw-coupled to the rear case 130-1, but are not limited thereto.

As the second coupling parts 176 are fixed to the rear case 130-1 together with the first coupling parts 178 of the main body 171, the yoke 172 may provide a function of designing a magnetic path and may support the speaker module 170 such that the speaker module 170 is not pushed by water pressure or air pressure applied from the outside. For example, in the state of being fixed to the rear case 130-1 through the second coupling parts 176, the yoke 172 may support the speaker module 170 through the second base part 175 such that the speaker module 170 is brought into close contact with the speaker support part 131.

In various embodiments, the direction of external pressure (e.g., water pressure or air pressure) applied to the speaker module 170 by fluid introduced into the rear case 130-1 from the outside (e.g., liquid or gas introduced through the speaker hole 112 of FIG. 2) may be substantially perpendicular to the first direction D1 and the second direction D2, and the first portion 1751 of the second base part 175 may support the speaker module 170 in the direction opposite to the direction of the external pressure.

FIGS. 11B and 11C are views illustrating an embodiment in which in the embodiment of FIG. 11A, a hook fastening structure (e.g., a locking protrusion (e.g., a third portion 1753) and a locking jaw 137) in addition to the screw fastening structure through the coupling members 184 are added between the yoke 172 and the rear case 130-1. For example, FIG. 11C may be a sectional view of a portion where the third portion 1753 and the locking jaw 137 are fastened with each other in FIG. 11B.

Referring to FIGS. 11B and 11C, the second base part 175 of the yoke 172 may further include the third portion 1753 extending from the first portion 1751. The third portion 1753 of the yoke 172 may be a locking protrusion (or, a hook) for hook fastening of the yoke 172 and the rear case 130-1. For example, the second base part 175 may have a shape in which the second portion 1752 extends from one end of the first portion 1751 (e.g., an end in the first direction D1) so as to be substantially perpendicular to the first portion 1751 and the third portion 1753 extends from an opposite end of the first portion 1751 (e.g., an end in the second direction D2) so as to be substantially perpendicular to the first portion 1751. The direction in which the third portion 1753 extends from the first portion 1751 may be opposite to the direction in which the second portion 1752 extends from the first portion 1751. For example, the third portion 1753 may extend from the first portion 1751 in the direction opposite to the direction in which the surface of the speaker module 170 from which sound is output faces. The direction in which the third portion 1753 extends from the first portion 1751 may be substantially the same as the direction of external pressure (e.g., water pressure or air pressure) applied to the speaker module 170 by fluid introduced into the rear case 130-1.

The third portion 1753 may be hooked or locked to the locking jaw 137 formed on the rear case 130-1. For example, the locking jaw 137 with which at least part of the third portion 1753 makes contact may be formed on one surface of the rear case 130-1 that faces in the first direction D1. As the third portion 1753 is brought into contact with and locked to the locking jaw 137, the first portion 1751 of the second base part 175 may stably support the speaker module 170 without being pushed in the extension direction of the third portion 1753.

FIG. 12 is a block diagram illustrating an electronic device in a network environment according to various embodiments.

Referring to Fig. 12, the electronic device 201 (e.g., the electronic device 100 of FIG. 2, FIG. 3 and FIG. 4) in the network environment 200 may communicate with an electronic device 202 via a first network 298 (e.g., a short-range wireless communication network), or at least one of an electronic device 204 or a server 208 via a second network 299 (e.g., a long-range wireless communication network). According to an embodiment, the electronic device 201 may communicate with the electronic device 204 via the server 208.

According to an embodiment, the electronic device 201 may include a processor 220, a memory 230, an input module 250, a sound output module 255, a display module 260, an audio module 270, a sensor module 276, an interface 277, a connecting terminal 278, a haptic module 279, a camera module 280, a power management module 288, a battery 289, a communication module 290, a subscriber identification module (SIM) 296, or an antenna module 297. In some embodiments, at least one of the components (e.g., the connecting terminal 278) may be omitted from the electronic device 201, or one or more other components may be added in the electronic device 201. In some embodiments, some of the components (e.g., the sensor module 276, the camera module 280, or the antenna module 297) may be implemented as a single component (e.g., the display module 260).

The processor 220 may execute, for example, software (e.g., a program 240) to control at least one other component (e.g., a hardware or software component) of the electronic device 201 coupled with the processor 220, and may perform various data processing or computation. According to one embodiment, as at least part of the data processing or computation, the processor 220 may store a command or data received from another component (e.g., the sensor module 276 or the communication module 290) in volatile memory 232, process the command or the data stored in the volatile memory 232, and store resulting data in non-volatile memory 234. According to an embodiment, the processor 220 may include a main processor 221 (e.g., a central processing unit (CPU) or an application processor (AP)), or an auxiliary processor 223 (e.g., a graphics processing unit (GPU), a neural processing unit (NPU), an image signal processor (ISP), a sensor hub processor, or a communication processor (CP)) that is operable independently from, or in conjunction with, the main processor 221. For example, when the electronic device 201 includes the main processor 221 and the auxiliary processor 223, the auxiliary processor 223 may be adapted to consume less power than the main processor 221, or to be specific to a specified function. The auxiliary processor 223 may be implemented as separate from, or as part of the main processor 221.

The auxiliary processor 223 may control at least some of functions or states related to at least one component (e.g., the display module 260, the sensor module 276, or the communication module 290) among the components of the electronic device 201, instead of the main processor 221 while the main processor 221 is in an inactive (e.g., sleep) state, or together with the main processor 221 while the main processor 221 is in an active state (e.g., executing an application). According to an embodiment, the auxiliary processor 223 (e.g., an image signal processor or a communication processor) may be implemented as part of another component (e.g., the camera module 280 or the communication module 290) functionally related to the auxiliary processor 223. According to an embodiment, the auxiliary processor 223 (e.g., the neural processing unit) may include a hardware structure specified for artificial intelligence model processing. An artificial intelligence model may be generated by machine learning. Such learning may be performed, e.g., by the electronic device 201 where the artificial intelligence is performed or via a separate server (e.g., the server 208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 230 may store various data used by at least one component (e.g., the processor 220 or the sensor module 276) of the electronic device 201. The various data may include, for example, software (e.g., the program 240) and input data or output data for a command related thereto. The memory 230 may include the volatile memory 232 or the non-volatile memory 234.

The program 240 may be stored in the memory 230 as software, and may include, for example, an operating system (OS) 242, middleware 244, or an application 246.

The input module 250 may receive a command or data to be used by another component (e.g., the processor 220) of the electronic device 201, from the outside (e.g., a user) of the electronic device 201. The input module 250 may include, for example, a microphone, a mouse, a keyboard, a key (e.g., a button), or a digital pen (e.g., a stylus pen).

The sound output module 255 may output sound signals to the outside of the electronic device 201. The sound output module 255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 260 may visually provide information to the outside (e.g., a user) of the electronic device 201. The display module 260 may include, for example, a display, a hologram device, or a projector and control circuitry to control a corresponding one of the display, hologram device, and projector. According to an embodiment, the display module 260 may include a touch sensor adapted to detect a touch, or a pressure sensor adapted to measure the intensity of force incurred by the touch.

The audio module 270 may convert a sound into an electrical signal and vice versa. According to an embodiment, the audio module 270 may obtain the sound via the input module 250, or output the sound via the sound output module 255 or a headphone of an external electronic device (e.g., an electronic device 202) directly (e.g., wiredly) or wirelessly coupled with the electronic device 201.

The sensor module 276 may detect an operational state (e.g., power or temperature) of the electronic device 201 or an environmental state (e.g., a state of a user) external to the electronic device 201, and then generate an electrical signal or data value corresponding to the detected state. According to an embodiment, the sensor module 276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 277 may support one or more specified protocols to be used for the electronic device 201 to be coupled with the external electronic device (e.g., the electronic device 202) directly (e.g., wiredly) or wirelessly. According to an embodiment, the interface 277 may include, for example, a high definition multimedia interface (HDMI), a universal serial bus (USB) interface, a secure digital (SD) card interface, or an audio interface.

A connecting terminal 278 may include a connector via which the electronic device 201 may be physically connected with the external electronic device (e.g., the electronic device 202). According to an embodiment, the connecting terminal 278 may include, for example, a HDMI connector, a USB connector, a SD card connector, or an audio connector (e.g., a headphone connector).

The haptic module 279 may convert an electrical signal into a mechanical stimulus (e.g., a vibration or a movement) or electrical stimulus which may be recognized by a user via his tactile sensation or kinesthetic sensation. According to an embodiment, the haptic module 279 may include, for example, a motor, a piezoelectric element, or an electric stimulator.

The camera module 280 may capture a still image or moving images. According to an embodiment, the camera module 280 may include one or more lenses, image sensors, image signal processors, or flashes.

The power management module 288 may manage power supplied to the electronic device 201. According to one embodiment, the power management module 288 may be implemented as at least part of, for example, a power management integrated circuit (PMIC).

The battery 289 may supply power to at least one component of the electronic device 201. According to an embodiment, the battery 289 may include, for example, a primary cell which is not rechargeable, a secondary cell which is rechargeable, or a fuel cell.

The communication module 290 may support establishing a direct (e.g., wired) communication channel or a wireless communication channel between the electronic device 201 and the external electronic device (e.g., the electronic device 202, the electronic device 204, or the server 208) and performing communication via the established communication channel. The communication module 290 may include one or more communication processors that are operable independently from the processor 220 (e.g., the application processor (AP)) and supports a direct (e.g., wired) communication or a wireless communication. According to an embodiment, the communication module 290 may include a wireless communication module 292 (e.g., a cellular communication module, a short-range wireless communication module, or a global navigation satellite system (GNSS) communication module) or a wired communication module 294 (e.g., a local area network (LAN) communication module or a power line communication (PLC) module). A corresponding one of these communication modules may communicate with the external electronic device via the first network 298 (e.g., a short-range communication network, such as Bluetooth^{™}, wireless-fidelity (Wi-Fi) direct, or infrared data association (IrDA)) or the second network 299 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 292 may identify and authenticate the electronic device 201 in a communication network, such as the first network 298 or the second network 299, using subscriber information (e.g., international mobile subscriber identity (IMSI)) stored in the subscriber identification module 296.

The wireless communication module 292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 292 may support a high-frequency band (e.g., the mmWave band) to achieve, e.g., a high data transmission rate. The wireless communication module 292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 292 may support various requirements specified in the electronic device 201, an external electronic device (e.g., the electronic device 204), or a network system (e.g., the second network 299). According to an embodiment, the wireless communication module 292 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 297 may transmit or receive a signal or power to or from the outside (e.g., the external electronic device) of the electronic device 201. According to an embodiment, the antenna module 297 may include an antenna including a radiating element composed of a conductive material or a conductive pattern formed in or on a substrate (e.g., a printed circuit board (PCB)). According to an embodiment, the antenna module 297 may include a plurality of antennas (e.g., array antennas). In such a case, at least one antenna appropriate for a communication scheme used in the communication network, such as the first network 298 or the second network 299, may be selected, for example, by the communication module 290 (e.g., the wireless communication module 292) from the plurality of antennas. The signal or the power may then be transmitted or received between the communication module 290 and the external electronic device via the selected at least one antenna. According to an embodiment, another component (e.g., a radio frequency integrated circuit (RFIC)) other than the radiating element may be additionally formed as part of the antenna module 297.

According to various embodiments, the antenna module 297 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 201 and the external electronic device 204 via the server 208 coupled with the second network 299. Each of the electronic devices 202 or 204 may be a device of a same type as, or a different type, from the electronic device 201. According to an embodiment, all or some of operations to be executed at the electronic device 201 may be executed at one or more of the external electronic devices 202, 204, or 208. For example, if the electronic device 201 should perform a function or a service automatically, or in response to a request from a user or another device, the electronic device 201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 201. The electronic device 201 may provide the outcome, with or without further processing of the outcome, as at least part of a reply to the request. To that end, a cloud computing, distributed computing, mobile edge computing (MEC), or client-server computing technology may be used, for example. The electronic device 201 may provide ultra low-latency services using, e.g., distributed computing or mobile edge computing. In another embodiment, the external electronic device 204 may include an internet-of-things (IoT) device. The server 208 may be an intelligent server using machine learning and/or a neural network. According to an embodiment, the external electronic device 204 or the server 208 may be included in the second network 299. The electronic device 201 may be applied to intelligent services (e.g., smart home, smart city, smart car, or healthcare) based on 5G communication technology or IoT-related technology.

A wearable electronic device in the related art may include a speaker module and a separate support structure (e.g., a SUS plate) that supports the speaker module for waterproofing or sealing of the electronic device. The support structure may be attached to the speaker module and may be fastened to the housing through screws. In this case, misalignment may occur in an assembly process, and costs may be increased since a separate part is required.

Embodiments of the disclosure relate to a structure in which a speaker module is coupled or fastened to a housing through a yoke, which is a part included in the speaker module for magnetic path design, in a wearable electronic device including the speaker module.

The technical problems to be solved by the disclosure are not limited to the aforementioned problems, and any other technical problems not mentioned herein will be clearly understood from the following description by those skilled in the art to which the disclosure pertains.

A wearable electronic device (100) according to an embodiment may include a housing (110) including a front member (120) that faces a first direction (D1), a rear member (130) that faces a second direction (D2) opposite to the first direction (D1), and a side member (140) that surrounds a space between the front member (120) and the rear member (130), a display (181) disposed inside the housing (110) and viewable through the front member (120), and a speaker module (160 or 170) accommodated in the housing (110) and coupled to an inner surface of the rear member (130). The speaker module (160 or 170) may include a speaker frame (163 or 173) including first coupling parts (168 or 178) coupled to the rear member (130), a speaker unit (164 or 174) including a magnet (610 or 1810), a voice coil (620 or 1820), and a diaphragm (630 or 1830), and a yoke (162 or 172) that includes second coupling parts (166 or 176) coupled to the rear member (130) and that is coupled to one surface of the magnet (610 or 1810) to surround at least a portion of an outer surface of the speaker frame (163 or 173). The first coupling parts (168 or 178) and the second coupling parts (166 or 176) may be coupled to the rear member (130) through coupling members (184) in a stacked manner.

According to an embodiment, the speaker frame (163) may include a first base part (167). The first coupling parts (168 or 178) may extend from the first base part (167). The first coupling parts (168 or 178) may include, in partial regions thereof, first through-holes (168h) into which the coupling members (184) are inserted.

According to an embodiment, the yoke (162 or 172) may further include a second base part (165 or 175). The second coupling parts (166 or 176) may extend from the second base part (165 or 175) and may include, in partial regions thereof, second through-holes (166h) into which the coupling members (184) are inserted.

According to an embodiment, the second coupling parts (166) may extend from opposite ends of the second base part (165) that face away from each other in a long side direction of the second base part (165).

According to an embodiment, the second base part (165 or 175) may include a first portion (1651 or 1751) having a planar form and second portions (1652 or 1752) that extend from opposite ends of the first portion (1651 or 1751) so as to be substantially perpendicular to the first portion (1651 or 1751). The second coupling parts (166 or 176) may extend from the second portions (1652 or 1752) so as to be substantially perpendicular to the second portions (1652 or 1752).

According to an embodiment, the housing (110) may be configured such that the front member (120) faces in a first direction (D1) and the rear member (130) faces in a second direction (D2) opposite to the first direction (D1). The speaker module (160 or 170) may be coupled to the rear member (130) such that a surface of the speaker unit (164 or 174) from which sound is output faces in the second direction (D2).

According to an embodiment, depending on a direction in which the speaker module (160 or 170) is coupled, the yoke (162 or 172) may be coupled to the rear member (130) such that the first portion (1651 or 1751) of the second base part (165 or 175) faces in the first direction (D1).

According to an embodiment, the rear member (130) may include coupling holes (134) to which the coupling members (184) are coupled. The coupling members (184) may be configured to pass through the second coupling parts (166 or 176) and the first coupling parts (168 or 178) in the second direction (D2) and may be coupled to the coupling holes (134).

According to an embodiment, the rear member (130) may include a speaker hole (112) formed therein through which sound output from the speaker module (160 or 170) moves outside the housing (110). The speaker hole (112) may be configured such that fluid introduced into the inside of the rear member (130) through the speaker hole (112) causes a first pressure (F1) to the speaker module (160 or 170) in the first direction (D1) being applied. The coupling members (184) may be configured to cause a second pressure (F2) being applied to the first coupling parts (168 or 178) and the second coupling parts (166 or 176) in the second direction (D2) when passing through the second coupling parts (166 or 176) and the first coupling parts (168 or 178) and being fastened to the coupling holes (134).

According to an embodiment, the rear member (130) may include at least one coupling protrusion (135) to which the side member (140) is coupled. The at least one coupling protrusion (135) may be formed at a position facing the speaker module (160 or 170). At least a portion of the yoke (162 or 172) may be hooked to the at least one coupling protrusion (135).

According to an embodiment, a locking groove (136) may be formed on a surface of the coupling protrusion (135) that faces the speaker module (160 or 170). The second base part (165 or 175) of the yoke (162 or 172) may further include a third portion (1653 or 1753) that extends from part of the first portion (1651 or 1751) toward the coupling protrusion (135). At least part of the third portion (1653 or 1753) may be inserted into the locking groove (136).

According to an embodiment, the rear member (130) may include a rear case (130-1) coupled with the side member (140) and a cover (130-2) coupled with the rear case (130-1). The rear case (130-1) may include a speaker support part (131) to which the speaker module (160 or 170) is coupled. A recess (132) depressed in the second direction (D2) may be formed in the speaker support part (131).

According to an embodiment, the speaker module (160 or 170) may be disposed such that a surface of the speaker unit (164 or 174) from which sound is output faces toward the recess (132). The recess (132) may be connected with the speaker hole (112).

According to an embodiment, the first portion (1651 or 1751) of the second base part (165 or 175) may be substantially parallel to the second coupling parts (166 or 176). The first portion (1651 or 1751) may support the speaker frame (163 or 173) in the second direction (D2).

According to an embodiment, the magnet may be plural.

According to an embodiment, the yoke may include one or more ventilation holes (165h). The one or more ventilation holes (165h) may be covered with a mesh member.

According to an embodiment, the wearable electronic device (100) may further include a fastening member to be worn on the user's body.

According to an embodiment, the wearable electronic device (100) may further include a bracket (182) disposed between the display and the rear member.

According to an embodiment, at least a portion of a surface opposite to a surface to which the magnet is attached on the yoke may be disposed to face the bracket.

According to an embodiment, the wearable electronic device (100) may further include a circuit board (150) seated on the bracket. The speaker module may be disposed on a side surface of the circuit board.

According to the embodiments of the disclosure, without addition of a separate part, the speaker module may be screw-coupled to the housing at the same time as being assembled to the housing. Thus, defects depending on assembly may be minimized or prevented, and effects of simplifying an assembly process and reducing costs may be achieved.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 240) including one or more instructions that are stored in a storage medium (e.g., internal memory 236 or external memory 238) that is readable by a machine (e.g., the electronic device 201). For example, a processor (e.g., the processor 220) of the machine (e.g., the electronic device 201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable electronic device (100), comprising:
a housing (110) including a front member (120) configured to face a first direction (D1), a rear member (130) configured to face a second direction (D2) opposite to the first direction (D1), and a side member (140) configured to surround a space between the front member (120) and the rear member (130);
a display (181) disposed inside the housing (110) and viewable through the front member (120); and
a speaker module (160 or 170) accommodated in the housing (110) and coupled to an inner surface of the rear member (130),
wherein the speaker module (160 or 170) includes:
a speaker frame (163 or 173) including first coupling parts (168 or 178) coupled to the rear member (130);
a speaker unit (164 or 174) including a magnet (610 or 1810), a voice coil (620 or 1820), and a diaphragm (630 or 1830); and
a yoke (162 or 172) including second coupling parts (166 or 176) coupled to the rear member (130), the yoke (162 or 172) coupled to one surface of the magnet (610 or 1810) and surrounding at least a portion of an outer surface of the speaker frame (163 or 173),
**characterized in that**
the first coupling parts (168 or 178) and the second coupling parts (166 or 176) are coupled to the rear member (130) through coupling members (184) in a stacked manner.

2. The wearable electronic device (100) of claim 1, wherein the speaker frame (163) includes a first base part (167), and the first coupling parts (168 or 178) extend from the first base part (167), and
wherein the first coupling parts (168 or 178) include, in partial regions thereof, first through-holes (168h) into which the coupling members (184) are inserted.

3. The wearable electronic device (100) of claim 1 or 2, wherein the yoke (162 or 172) further includes a second base part (165 or 175), and
wherein the second coupling parts (166 or 176) extend from the second base part (165 or 175) and include, in partial regions thereof, second through-holes (166h) into which the coupling members (184) are inserted.

4. The wearable electronic device (100) of claim 3, wherein the second coupling parts (166) extend from opposite ends of the second base part (165) configured to face away from each other in a long side direction of the second base part (165).

5. The wearable electronic device (100) of any one of claim 3 or 4, wherein the second base part (165 or 175) includes a first portion (1651 or 1751) having a planar form and second portions (1652 or 1752) configured to extend from opposite ends of the first portion (1651 or 1751) so as to be substantially perpendicular to the first portion (1651 or 1751), and
wherein the second coupling parts (166 or 176) extend from the second portions (1652 or 1752) so as to be substantially perpendicular to the second portions (1652 or 1752).

6. The wearable electronic device (100) of any one of claims 1 to 5, wherein the housing (110) is configured such that the front member (120) faces in a first direction (D1) and the rear member (130) faces in a second direction (D2) opposite to the first direction (D1), and
wherein the speaker module (160 or 170) is coupled to the rear member (130) such that a surface of the speaker unit (164 or 174) from which sound is output faces in the second direction (D2).

7. The wearable electronic device (100) of any one of claims 3 to 5, wherein depending on a direction in which the speaker module (160 or 170) is coupled, the yoke (162 or 172) is coupled to the rear member (130) such that the first portion (1651 or 1751) of the second base part (165 or 175) faces in the first direction (D1).

8. The wearable electronic device (100) of any one of claims 1 to 7, wherein the rear member (130) includes coupling holes (134) to which the coupling members (184) are coupled, and
wherein the coupling members (184) are configured to pass through the second coupling parts (166 or 176) and the first coupling parts (168 or 178) in the second direction (D2) and are coupled to the coupling holes (134).

9. The wearable electronic device (100) of any one of claims 1 to 8, wherein the rear member (130) includes a speaker hole (112) formed therein through which sound output from the speaker module (160 or 170) moves outside the housing (110),
wherein the speaker hole (112) is configured such that fluid introduced into the inside of the rear member (130) through the speaker hole (112) causes a first pressure (F1) to the speaker module (160 or 170) in the first direction (D1) being applied, and
wherein the coupling members (184) are configured to cause a second pressure (F2) being applied to the first coupling parts (168 or 178) and the second coupling parts (166 or 176) in the second direction (D2) when passing through the second coupling parts (166 or 176) and the first coupling parts (168 or 178) and being fastened to the coupling holes (134).

10. The wearable electronic device (100) of any one of claims 1 to 9, wherein the rear member (130) includes at least one coupling protrusion (135) to which the side member (140) is coupled,
wherein the at least one coupling protrusion (135) is formed at a position facing the speaker module (160 or 170), and
wherein at least a portion of the yoke (162 or 172) is hooked to the at least one coupling protrusion (135).

11. The wearable electronic device (100) of any one of claims 1 to 10, wherein the rear member (130) includes a rear case (130-1) coupled with the side member (140) and a cover (130-2) coupled with the rear case (130-1),
wherein the rear case (130-1) includes a speaker support part (131) to which the speaker module (160 or 170) is coupled, and
wherein a recess (132) depressed in the second direction (D2) is formed in the speaker support part (131).

12. The wearable electronic device (100) of any one of claims 1 to 11, wherein the speaker module (160 or 170) is disposed such that a surface of the speaker unit (164 or 174) from which sound is output faces toward the recess (132), and
wherein the recess (132) is connected with the speaker hole (112).

13. The wearable electronic device (100) of claim 5, wherein the first portion (1651 or 1751) of the second base part (165 or 175) is substantially parallel to the second coupling parts (166 or 176), and
wherein the first portion (1651 or 1751) supports the speaker frame (163 or 173) in the second direction (D2).

14. The wearable electronic device (100) of claim 1, wherein the yoke includes one or more ventilation holes (165h), and
wherein the one or more ventilation holes (165h) are covered with a mesh member.

15. The wearable electronic device (100) of claim 1, further comprising a bracket (182) disposed between the display and the rear member.

## Patentansprüche

1. Tragbare elektronische Vorrichtung (100), umfassend:
ein Gehäuse (110) mit einem vorderen Element (120), das so konfiguriert ist, dass es in eine erste Richtung (D1) weist, einem hinteren Element (130), das so konfiguriert ist, dass es in eine zweite Richtung (D2) entgegengesetzt zur ersten Richtung (D1) weist, und einem Seitenelement (140), das dazu konfiguriert ist, einen Raum zwischen dem vorderen Element (120) und dem hinteren Element (130) zu umschließen;
eine Anzeige (181), die innerhalb des Gehäuses (110) angeordnet und durch das vordere Element (120) sichtbar ist; und
ein Lautsprechermodul (160 oder 170), das im Gehäuse (110) untergebracht und mit einer Innenfläche des hinteren Elements (130) verbunden ist,
wobei das Lautsprechermodul (160 oder 170) Folgendes umfasst:
einen Lautsprecherrahmen (163 oder 173) mit ersten Kopplungsteilen (168 oder 178), die mit dem hinteren Element (130) gekoppelt sind;
eine Lautsprechereinheit (164 oder 174) mit einem Magneten (610 oder 1810), einer Schwingspule (620 oder 1820) und einer Membran (630 oder 1830); und
ein Joch (162 oder 172) mit zweiten Kopplungsteilen (166 oder 176), die mit dem hinteren Element (130) gekoppelt sind, wobei das Joch (162 oder 172) mit einer Oberfläche des Magneten (610 oder 1810) gekoppelt ist und zumindest einen Abschnitt einer Außenfläche des Lautsprecherrahmens (163 oder 173) umgibt,
**dadurch gekennzeichnet, dass**
die ersten Kopplungsteile (168 oder 178) und die zweiten Kopplungsteile (166 oder 176) über Kopplungselemente (184) gestapelt mit dem hinteren Element (130) gekoppelt sind.

2. Tragbare elektronische Vorrichtung (100) nach Anspruch 1, wobei der Lautsprecherrahmen (163) ein erstes Basisteil (167) umfasst und sich die ersten Kopplungsteile (168 oder 178) von dem ersten Basisteil (167) erstrecken, und
wobei die ersten Kopplungsteile (168 oder 178) in Teilbereichen davon erste Durchgangslöcher (168h) umfassen, in die die Kopplungselemente (184) eingeführt sind.

3. Tragbare elektronische Vorrichtung (100) nach Anspruch 1 oder 2, wobei das Joch (162 oder 172) ferner ein zweites Basisteil (165 oder 175) umfasst, und
wobei sich die zweiten Kopplungsteile (166 oder 176) vom zweiten Basisteil (165 oder 175) erstrecken und in Teilbereichen davon zweite Durchgangslöcher (166h) umfassen, in die die Kopplungselemente (184) eingeführt sind.

4. Tragbare elektronische Vorrichtung (100) nach Anspruch 3, wobei sich die zweiten Kopplungsteile (166) von gegenüberliegenden Enden des zweiten Basisteils (165) erstrecken, die so konfiguriert sind, dass sie in Längsrichtung des zweiten Basisteils (165) voneinander wegweisen.

5. Tragbare elektronische Vorrichtung (100) nach einem der Ansprüche 3 oder 4, wobei das zweite Basisteil (165 oder 175) einen ersten Abschnitt (1651 oder 1751) mit einer ebenen Form und zweite Abschnitte (1652 oder 1752) umfasst, die so konfiguriert sind, dass sie sich von gegenüberliegenden Enden des ersten Abschnitts (1651 oder 1751) so erstrecken, dass sie im Wesentlichen senkrecht zum ersten Abschnitt (1651 oder 1751) verlaufen, und
wobei sich die zweiten Kopplungsteile (166 oder 176) von den zweiten Abschnitten (1652 oder 1752) so erstrecken, dass sie im Wesentlichen senkrecht zu den zweiten Abschnitten (1652 oder 1752) verlaufen.

6. Tragbare elektronische Vorrichtung (100) nach einem der Ansprüche 1 bis 5, wobei das Gehäuse (110) so konfiguriert ist, dass das vordere Element (120) in eine erste Richtung (D1) und das hintere Element (130) in eine zweite Richtung (D2) entgegengesetzt zur ersten Richtung (D1) weist, und
wobei das Lautsprechermodul (160 oder 170) mit dem hinteren Element (130) so gekoppelt ist, dass eine Oberfläche der Lautsprechereinheit (164 oder 174), von der aus Schall ausgegeben wird, in die zweite Richtung (D2) weist.

7. Tragbare elektronische Vorrichtung (100) nach einem der Ansprüche 3 bis 5, wobei je nach der Richtung, in der das Lautsprechermodul (160 oder 170) gekoppelt ist, das Joch (162 oder 172) mit dem hinteren Element (130) so gekoppelt ist, dass der erste Abschnitt (1651 oder 1751) des zweiten Basisteils (165 oder 175) in die erste Richtung (D1) weist.

8. Tragbare elektronische Vorrichtung (100) nach einem der Ansprüche 1 bis 7, wobei das hintere Element (130) Kopplungslöcher (134) umfasst, mit denen die Kopplungselemente (184) gekoppelt sind, und
wobei die Kopplungselemente (184) so konfiguriert sind, dass sie in der zweiten Richtung (D2) durch die zweiten Kopplungsteile (166 oder 176) und die ersten Kopplungsteile (168 oder 178) verlaufen und mit den Kopplungslöchern (134) gekoppelt sind.

9. Tragbare elektronische Vorrichtung (100) nach einem der Ansprüche 1 bis 8, wobei das hintere Element (130) ein darin ausgebildetes Lautsprecherloch (112) umfasst, durch das sich der vom Lautsprechermodul (160 oder 170) ausgegebene Schall aus dem Gehäuse (110) bewegt,
wobei das Lautsprecherloch (112) so konfiguriert ist, dass ein durch das Lautsprecherloch (112) in das Innere des hinteren Elements (130) eingeleitetes Fluid bewirkt, dass ein erster Druck (F1) in der ersten Richtung (D1) auf das Lautsprechermodul (160 oder 170) ausgeübt wird, und
wobei die Kopplungselemente (184) so konfiguriert sind, dass sie bewirken, dass beim Passieren der zweiten Kopplungsteile (166 oder 176) und der ersten Kopplungsteile (168 oder 178) und bei der Befestigung an den Kopplungslöchern (134) ein zweiter Druck (F2) in der zweiten Richtung (D2) auf die ersten Kopplungsteile (168 oder 178) und die zweiten Kopplungsteile (166 oder 176) ausgeübt wird.

10. Tragbare elektronische Vorrichtung (100) nach einem der Ansprüche 1 bis 9, wobei das hintere Element (130) mindestens einen Kopplungsvorsprung (135) aufweist, mit dem das Seitenelement (140) gekoppelt ist,
wobei der mindestens eine Kopplungsvorsprung (135) an einer dem Lautsprechermodul (160 oder 170) zugewandten Stelle ausgebildet ist, und
wobei zumindest ein Abschnitt des Jochs (162 oder 172) an dem mindestens einen Kopplungsvorsprung (135) eingehängt ist.

11. Tragbare elektronische Vorrichtung (100) nach einem der Ansprüche 1 bis 10, wobei das hintere Element (130) ein mit dem Seitenelement (140) gekoppeltes hinteres Gehäuse (130-1) und eine mit dem hinteren Gehäuse (130-1) gekoppelte Abdeckung (130-2) umfasst,
wobei das hintere Gehäuse (130-1) ein Lautsprecher-Stützteil (131) umfasst, mit dem das Lautsprechermodul (160 oder 170) gekoppelt ist, und
wobei in dem Lautsprecher-Stützteil (131) eine in der zweiten Richtung (D2) vertiefte Aussparung (132) ausgebildet ist.

12. Tragbare elektronische Vorrichtung (100) nach einem der Ansprüche 1 bis 11, wobei das Lautsprechermodul (160 oder 170) so angeordnet ist, dass eine Oberfläche der Lautsprechereinheit (164 oder 174), von der aus Schall ausgegeben wird, zur Aussparung (132) weist, und
wobei die Aussparung (132) mit dem Lautsprecherloch (112) verbunden ist.

13. Tragbare elektronische Vorrichtung (100) nach Anspruch 5, wobei der erste Abschnitt (1651 oder 1751) des zweiten Basisteils (165 oder 175) im Wesentlichen parallel zu den zweiten Kopplungsteilen (166 oder 176) verläuft, und
wobei der erste Abschnitt (1651 oder 1751) den Lautsprecherrahmen (163 oder 173) in der zweiten Richtung (D2) stützt.

14. Tragbare elektronische Vorrichtung (100) nach Anspruch 1, wobei das Joch ein oder mehrere Belüftungslöcher (165h) umfasst, und
wobei das eine oder die mehreren Belüftungslöcher (165h) mit einem Maschenelement abgedeckt sind.

15. Tragbare elektronische Vorrichtung (100) nach Anspruch 1, umfassend ferner eine Halterung (182), die zwischen der Anzeige und dem hinteren Element angeordnet ist.

## Revendications

1. Dispositif électronique à porter sur soi (100), comprenant :
un boîtier (110) comprenant un élément avant (120) configuré pour faire face à une première direction (D1), un élément arrière (130) configuré pour faire face à une seconde direction (D2) opposée à la première direction (D1), et un élément latéral (140) configuré pour entourer un espace entre l'élément avant (120) et l'élément arrière (130) ;
un affichage (181) disposé à l'intérieur du boîtier (110) et visible à travers l'élément avant (120) ; et
un module de haut-parleur (160 ou 170) logé dans le boîtier (110) et couplé à une surface intérieure de l'élément arrière (130),
dans lequel le module de haut-parleur (160 ou 170) comprend :
un cadre de haut-parleur (163 ou 173) comprenant des premières parties de couplage (168 ou 178) couplées à l'élément arrière (130) ;
une unité de haut-parleur (164 ou 174) comprenant un aimant (610 ou 1810), une bobine acoustique (620 ou 1820), et un diaphragme (630 ou 1830) ; et
une culasse (162 ou 172) comprenant des secondes parties de couplage (166 ou 176) couplées à l'élément arrière (130), la culasse (162 ou 172) étant couplée à une surface de l'aimant (610 ou 1810) et entourant au moins une partie d'une surface extérieure du cadre de haut-parleur (163 ou 173),
**caractérisé en ce que**
les premières parties de couplage (168 ou 178) et les secondes parties de couplage (166 ou 176) sont couplées à l'élément arrière (130) par l'intermédiaire d'éléments de couplage (184) de manière empilée.

2. Dispositif électronique à porter sur soi (100) selon la revendication 1, dans lequel le cadre de haut-parleur (163) comprend une première partie de base (167), et les premières parties de couplage (168 ou 178) s'étendent depuis la première partie de base (167), et
dans lequel les premières parties de couplage (168 ou 178) comprennent, dans des régions partielles de celles-ci, des premiers trous traversants (168h) dans lesquels les éléments de couplage (184) sont insérés.

3. Dispositif électronique à porter sur soi (100) selon la revendication 1 ou 2, dans lequel la culasse (162 ou 172) comprend en outre une seconde partie de base (165 ou 175), et
dans lequel les secondes parties de couplage (166 ou 176) s'étendent depuis la seconde partie de base (165 ou 175) et comprennent, dans des régions partielles de celles-ci, des seconds trous traversants (166h) dans lesquels les éléments de couplage (184) sont insérés.

4. Dispositif électronique à porter sur soi (100) selon la revendication 3, dans lequel les secondes parties de couplage (166) s'étendent depuis des extrémités opposées de la seconde partie de base (165) configurées pour être orientées à l'opposé l'une de l'autre dans une direction de côté long de la seconde partie de base (165).

5. Dispositif électronique à porter sur soi (100) selon l'une quelconque des revendications 3 ou 4, dans lequel la seconde partie de base (165 ou 175) comprend une première portion (1651 ou 1751) ayant une forme plane et des secondes portions (1652 ou 1752) configurées pour s'étendre depuis des extrémités opposées de la première portion (1651 ou 1751) de manière à être sensiblement perpendiculaires à la première portion (1651 ou 1751), et
dans lequel les secondes parties de couplage (166 ou 176) s'étendent depuis les secondes portions (1652 ou 1752) de manière à être sensiblement perpendiculaires aux secondes portions (1652 ou 1752).

6. Dispositif électronique à porter sur soi (100) selon l'une quelconque des revendications 1 à 5, dans lequel le boîtier (110) est configuré de telle sorte que l'élément avant (120) fait face dans une première direction (D1) et l'élément arrière (130) fait face dans une seconde direction (D2) opposée à la première direction (D1), et
dans lequel le module de haut-parleur (160 ou 170) est couplé à l'élément arrière (130) de telle sorte qu'une surface de l'unité de haut-parleur (164 ou 174) depuis laquelle un son est émis fait face dans la seconde direction (D2).

7. Dispositif électronique à porter sur soi (100) selon l'une quelconque des revendications 3 à 5, dans lequel, en fonction d'une direction dans laquelle le module de haut-parleur (160 ou 170) est couplé, la culasse (162 ou 172) est couplée à l'élément arrière (130) de telle sorte que la première portion (1651 ou 1751) de la seconde partie de base (165 ou 175) fait face dans la première direction (D1).

8. Dispositif électronique à porter sur soi (100) selon l'une quelconque des revendications 1 à 7, dans lequel l'élément arrière (130) comprend des trous de couplage (134) auxquels les éléments de couplage (184) sont couplés, et
dans lequel les éléments de couplage (184) sont configurés pour traverser les secondes parties de couplage (166 ou 176) et les premières parties de couplage (168 ou 178) dans la seconde direction (D2) et sont couplés aux trous de couplage (134).

9. Dispositif électronique à porter sur soi (100) selon l'une quelconque des revendications 1 à 8, dans lequel l'élément arrière (130) comprend un trou de haut-parleur (112) formé dans celui-ci à travers lequel un son émis par le module de haut-parleur (160 ou 170) se déplace à l'extérieur du boîtier (110),
dans lequel le trou de haut-parleur (112) est configuré de telle sorte qu'un fluide introduit à l'intérieur de l'élément arrière (130) à travers le trou de haut-parleur (112) provoque l'application au module de haut-parleur (160 ou 170) d'une première pression (F1) dans la première direction (D1), et
dans lequel les éléments de couplage (184) sont configurés pour provoquer l'application d'une seconde pression (F2) aux premières parties de couplage (168 ou 178) et aux secondes parties de couplage (166 ou 176) dans la seconde direction (D2) lorsqu'ils traversent les secondes parties de couplage (166 ou 176) et les premières parties de couplage (168 ou 178) et sont fixés aux trous de couplage (134).

10. Dispositif électronique à porter sur soi (100) selon l'une quelconque des revendications 1 à 9, dans lequel l'élément arrière (130) comprend au moins une saillie de couplage (135) à laquelle l'élément latéral (140) est couplé,
dans lequel ladite au moins une saillie de couplage (135) est formée à une position faisant face au module de haut-parleur (160 ou 170), et
dans lequel au moins une partie de la culasse (162 ou 172) est accrochée à ladite au moins une saillie de couplage (135).

11. Dispositif électronique à porter sur soi (100) selon l'une quelconque des revendications 1 à 10, dans lequel l'élément arrière (130) comprend un boîtier arrière (130-1) couplé à l'élément latéral (140) et un couvercle (130-2) couplé au boîtier arrière (130-1),
dans lequel le boîtier arrière (130-1) comprend une partie de support de haut-parleur (131) à laquelle le module de haut-parleur (160 ou 170) est couplé, et
dans lequel un évidement (132) enfoncé dans la seconde direction (D2) est formé dans la partie de support de haut-parleur (131).

12. Dispositif électronique à porter sur soi (100) selon l'une quelconque des revendications 1 à 11, dans lequel le module de haut-parleur (160 ou 170) est disposé de telle sorte qu'une surface de l'unité de haut-parleur (164 ou 174) depuis laquelle un son est émis fait face vers l'évidement (132), et
dans lequel l'évidement (132) est relié au trou de haut-parleur (112).

13. Dispositif électronique à porter sur soi (100) selon la revendication 5, dans lequel la première portion (1651 ou 1751) de la seconde partie de base (165 ou 175) est sensiblement parallèle aux secondes parties de couplage (166 ou 176), et
dans lequel la première portion (1651 ou 1751) supporte le cadre de haut-parleur (163 ou 173) dans la seconde direction (D2).

14. Dispositif électronique à porter sur soi (100) selon la revendication 1, dans lequel la culasse comprend un ou plusieurs trous de ventilation (165h), et
dans lequel lesdits un ou plusieurs trous de ventilation (165h) sont recouverts d'un élément en maille.

15. Dispositif électronique à porter sur soi (100) selon la revendication 1, comprenant en outre un support (182) disposé entre l'affichage et l'élément arrière.
